(19) Europäisches Patentamt
European Patent Office
Office européen des brevets

(11) **EP 4 768 541 A1**

(12) **EUROPEAN PATENT APPLICATION**

(43) Date of publication:
**01.07.2026 Bulletin 2026/27**

(21) Application number: **25227194.5**

(22) Date of filing: **24.12.2025**

(51) International Patent Classification (IPC):
***C08L 67/02*** *(2006.01)* ***C08L 75/06*** *(2006.01)*
***A43B 1/10*** *(2006.01)*

(52) Cooperative Patent Classification (CPC):
(C-Sets available)
**A43B 1/10; C08L 67/02; C08L 75/06** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **27.12.2024 US 202463739363 P**

(71) Applicant: **LCY Chemical Corp.**
**Kaohsiung City 812 (TW)**

(72) Inventors:
- **YI, Han-Liou**
**811 Kaohsiung City (TW)**
- **LIU, Ren-Hao**
**811 Kaohsiung City (TW)**
- **LIN, Hsiao-Chu**
**811 Kaohsiung City (TW)**
- **WANG, Yu-Lin**
**811 Kaohsiung City (TW)**
- **FAN, Kang-Ching**
**811 Kaohsiung City (TW)**
- **LIN, Yu-Pin**
**811 Kaohsiung City (TW)**

(74) Representative: **van Dam, Vincent**
**Octrooibureau Vriesendorp & Gaade B.V.**
**Koninginnegracht 19**
**2514 AB Den Haag (NL)**

(54) **HIGH-ADHESION COMPOSITION, ADHESIVE-FREE MULTILAYER COMPOSITE AND ARTICLE COMPRISING THE SAME, AND METHOD FOR MANUFACTURING ADHESIVE-FREE MULTILAYER COMPOSITE**

(57) A high-adhesion composition comprises: a thermoplastic material; and a cross-linked rubber; wherein the high-adhesion composition has a toluene insoluble content equal to or higher than 10%.



Processed by Luminess, 75001 PARIS (FR)

(Cont. next page)

(52) Cooperative Patent Classification (CPC): (Cont.)

C-Sets
**C08L 67/02, C08L 9/06, C08L 91/00;**
**C08L 67/02, C08L 23/08, C08L 9/00;**
**C08L 67/02, C08L 23/08, C08L 9/06;**
**C08L 75/06, C08L 67/02, C08L 9/00, C08L 9/06**

## Description

CROSS-REFERENCE TO RELATED APPLICATIONS

This application claims the benefit of filing date of U. S. Provisional Application Serial Number 63/739,363, filed December 27, 2024 under 35 USC § 119(e)(1).

BACKGROUND OF THE INVENTION

Field

The present invention relates to a high-adhesion composition, an adhesive-free multilayer composite and an article comprising the same, and a method for manufacturing the adhesive-free multilayer composite.

Description of Related Art

In multilayer structures, heterogeneous type materials for layers are commonly connected by bonding with an adhesive. However, this bonding method introduces issues, including high costs, environmental concerns, and safety risks for workers.

Specifically, in the footwear construction, shoe soles on the market typically consist of a two-layer structure: an outsole and a midsole. The outsole provides essential traction by creating an outer profile that ensures a firm grip with the ground. Meanwhile, the midsole offers elasticity, enabling reversible deformation to absorb and dampen the mechanical impact from walking or running. Traditionally, these layers are combined using methods such as stitching, sewing, or adhesive bonding. At present, the connection between the midsole and outsole usually requires surface pretreatment at first, and then is achieved by rubber treatment agent and adhesive.

On the other hand, in the context of hand tool design (e.g., screwdrivers, wrenches, and pliers), the handle must be highly wear-resistant, non-slip, and comfortable to hold. Traditional hand tool handles commonly use adhesives to attach rubber grips to the tool's plastic body, leading to similar issues with environmental impact and production cost.

However, conventional bonding methods present significant challenge. Adhesives often contain solvents that release volatile organic compounds (VOCs), posing risks to both the environment and worker health. Traditional techniques like stitching, sewing, and cementing involve multiple steps, making the process time-consuming and costly. Therefore, there remains a need for a material that eliminates the use of adhesives for bonding, thereby addressing the foregoing issues.

SUMMARY OF THE INVENTION

In view of the above problems, the present disclosure provides a high-adhesion composition and an adhesive-free multilayer composite capable of directly bonding two layers without the use of adhesives, thereby improving durability, reducing production costs, and meeting environmental protection requirements.

The present disclosure relates to a high-adhesion composition, comprising: a thermoplastic material; and a cross-linked rubber; wherein the high-adhesion composition has a toluene insoluble content equal to or higher than 10%.

The present disclosure also provides an adhesive-free multilayer composite, comprising: a first layer comprising the aforesaid high-adhesion composition; and a second layer formed on the first layer, wherein a peel strength between the first layer and the second layer is greater than or equal to 0.5 N/mm.

The present disclosure further provides an article, comprising the aforesaid adhesive-free multilayer composite.

The present disclosure further provides a method for manufacturing the aforesaid adhesive-free multilayer composite, comprising the following steps: providing a first material and a second material, wherein the first material comprises the aforesaid high-adhesion composition; and performing an injection molding process on the first material and the second material at a temperature between 160°C and 230 °C to obtain the aforesaid adhesive-free multilayer composite.

Other novel features of the disclosure will become more apparent from the following detailed description when taken in conjunction with the accompanying drawings.

DETAILED DESCRIPTION OF THE INVENTION

### High-adhesion composition

Disclosed in detail below is a high-adhesion composition, comprising: a thermoplastic material; and a cross-linked rubber; wherein the high-adhesion composition has a toluene insoluble content equal to or higher than 10%.

In some embodiments, the high-adhesion composition is a structure comprising a matrix and a disperse phase, wherein the matrix comprises the thermoplastic material, and the disperse phase comprises the cross-linked rubber.

In some embodiments, the high-adhesion composition is obtained by reacting a mixture, and a reactive compounding process and/or a melt blending process may be performed on a mixture comprising a thermoplastic material, and a crosslinkable rubber, (and/or other ingredients described below) to obtain the aforesaid high-adhesion composition comprising the thermoplastic material and the cross-linked rubber. Herein, the equipment for performing reactive compounding process and melt blending process is not particularly limited, and can be any processing equipment known in the art, such as a twin-screw extruder, a banbury mixer, a kneader mixer or a brabender mixer; but the present disclosure is not limited thereto. In some embodiments, the reactive compounding process and/or a melt blending process may be performed at a temperature between 160°C and 230°C.

Hereinafter, the ingredients comprised in the high-adhesion composition and in the mixture for forming the high-adhesion composition are described in detail below.

## Thermoplastic material

In some embodiments, the thermoplastic material may be selected from the group consisting of: polyester, olefin block copolymer (OBC) and a combination thereof. In some embodiments, the polyester may be any polyester known in the art, as long as the polyester has a melting point less than or equal to 180°C.For example, the polyester is co-polyester elastomer (COPE). In some embodiments, the olefin block copolymer (OBC) may be a block copolymer derived from ethylene and C4-C8 $\alpha$-olefin. However, the present disclosure is not limited thereto.

In some embodiments, the thermoplastic material is thermoplastic polyester elastomer (TPEE), providing high adhesion between the first layer and the second layer. In some embodiments, the thermoplastic polyester elastomer (TPEE) may have a melting point less than or equal to 180°C, less than or equal to 175°C, less than or equal to 170°C, less than or equal to 160°C, less than or equal to 155°C, or less than or equal to 150°C.

In some embodiments, the polyester may have a repeating unit represented by the following formula (I):

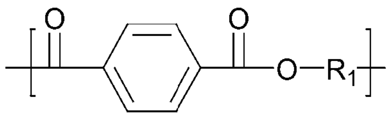

(I)

wherein $R_1$ is $-(C_2H_4O)_z-$, $-(C_4H_8O)_z-$, $-(C_6H_{12}O)_z-$,

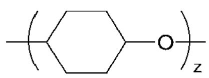

or

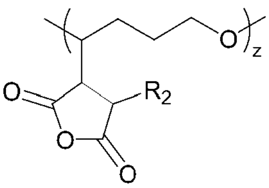

; z is an integer of 1 to 25; and $R_2$ is H or a substituent.

In some embodiments, one repeating unit represented by the formula (I) may be contained in the polyester. In another embodiment of the present disclosure, plural different repeating units represented by the formula (I) may be contained in the polyester. In addition, the polyester may have other repeating units as long as the polyester has the repeating unit represented by the formula (I).

In some embodiments, z may be an integer of 1 to 25, 1 to 24, 1 to 23, 1 to 22, 1 to 21, 1 to 20, 1 to 19, 1 to 18, 1 to 17, 1 to 16, 1 to 15, 1 to 14, 1 to 13, 1 to 12, 1 to 11 or 1 to 10.

In some embodiments, the substituent may be halogen, alkyl, alkenyl, alkynyl, alkoxy, cycloalkyl, heterocycloalkyl, aryl or heteroary.

In some embodiments, the polyester may be a co-polyester by introducing other diacids, such as isophthalic acid (IPA), or other diols, such as cyclohexane dimethanol (CHDM) to the polyester polyethylene terephthalate (PET), but the

present disclosure is not limited thereto.

In some embodiments, the thermoplastic material is one of the factors that may influence the crystallinity and/or thermal property factor (Factor); however, the present disclosure is not limited thereto.

In addition, when the thermoplastic material has a melting point more than 180°C, the processing temperature of a reactive compounding process and/or a melt blending process has to be increased to fully melt the thermoplastic material, and thereby the thermoplastic material and the crosslinkable rubber can be uniformly mixed. However, when the processing temperature is too high, the crosslinkable rubber may be oxidized and degraded or the oxidative cross-linking may be induced to generate gel, so the cross-linked rubber may not be uniformly dispersed, which affects the physical properties (for example, tensile strength or elongation) of the obtained high-adhesion composition.

Thus, in some embodiment, the melting point of the thermoplastic material of the high-adhesion composition for forming the first layer may be less than or equal to 180°C, and for example, may be in a range from about 75°C to 180°C, 80°C to 180°C, 85°C to 180°C, 90°C to 180°C, 95°C to 180°C, 100°C to 180°C, 105°C to 180°C, 110°C to 180°C, 115°C to 180°C, 115°C to 175°C, 115°C to 170°C, 80 °C to 170°C, or 115°C to 150°C; but the present disclosure is not limited thereto.

## Cross-linked/crosslinkable rubber

In the present disclosure, a cross-linked rubber of the high-adhesion composition is obtained by reacting a mixture comprising a crosslinkable rubber and crosslinking agent.

In some embodiments, the cross-linked/crosslinkable rubber may comprise a vinyl group, a styrene group or a combination thereof, wherein a content of the vinyl group is in a range from 10 wt% to 100 wt% based on a total weight of the cross-linked/crosslinkable rubber when the cross-linked/crosslinkable rubber comprises the vinyl group, and a content of the styrene group is equal to or less than 70 wt% based on the total weight of the cross-linked/crosslinkable rubber when the cross-linked/crosslinkable rubber comprises the styrene group.

In some embodiments, the cross-linked/crosslinkable rubber may comprise a vinyl group, and the content of the vinyl group may be in a range from 10 wt% to 100 wt% based on the total weight of the cross-linked/crosslinkable rubber. In some embodiments, the content of the vinyl group may be in a range from 14 wt% to 100 wt% based on the total weight of the cross-linked/crosslinkable rubber to further increase the slip resistance of the adhesive-free multilayer composite of the present disclosure. In some embodiments, the content of the vinyl group may be in a range from 14.5 wt% to 100 wt% based on the total weight of the cross-linked/crosslinkable rubber to further increase the slip resistance of the adhesive-free multilayer composite of the present disclosure.

In some embodiments, the cross-linked/crosslinkable rubber may comprise a styrene group, and the content of the styrene group may be in a range from 0.1 wt% to 70 wt% based on the total weight of the cross-linked/crosslinkable rubber. In some embodiments, the content of the styrene group may be in a range from 10 wt% to 70 wt%, in a range from 20 wt% to 70 wt%, in a range from 20wt% to 50wt%, in a range from 20wt% to 45wt%, or in a range from 25wt% to 40wt%, based on the total weight of the cross-linked/crosslinkable rubber.

In some embodiments, the cross-linked/crosslinkable rubber may comprise both the vinyl group and the styrene group, wherein the content of the vinyl group may be in a range from 10 wt% to 90 wt% and the content of the styrene group may be in a range from 10 wt% to 70 wt% based on the total weight of the cross-linked/crosslinkable rubber.

In some embodiments, the cross-linked/crosslinkable rubber may comprise both the vinyl group and the styrene group, wherein the content of the vinyl group may be in a range from 10 wt% to 20wt% and the content of the styrene group may be in a range from 20 wt% to 50 wt% based on the total weight of the cross-linked/crosslinkable rubber.

In some embodiments, the cross-linked/crosslinkable rubber may be at least one selected from the group consisting of: cross-linked/crosslinkable styrene-butadiene rubber (SBR), cross-linked/crosslinkable natural rubber (NR), cross-linked/crosslinkable butadiene rubber (BR), cross-linked/crosslinkable nitrile butadiene rubber (NBR) and cross-linked/crosslinkable ethylene vinyl acetate rubber (EVM). However, the present disclosure is not limited thereto, and any other cross-linked/crosslinkable rubber with the aforesaid vinyl group content and/or styrene group content may be used in the present disclosure.

In some embodiments, the cross-linked/crosslinkable rubber is a cross-linked/crosslinkable diene-based rubber. In some embodiments, the cross-linked/crosslinkable diene-based rubber is at least one selected from the group consisting of: cross-linked/crosslinkable styrene-butadiene rubber (SBR), cross-linked/crosslinkable butadiene rubber (BR), and cross-linked/crosslinkable nitrile butadiene rubber (NBR). In some embodiments, two or more cross-linked/-crosslinkable diene-based rubber may be used in the high-adhesion composition to provide a balanced effect between slip resistance and wear resistance performance. In some embodiments, the cross-linked/crosslinkable rubber comprises cross-linked/crosslinkable styrene-butadiene rubber (SBR) and cross-linked/crosslinkable butadiene rubber (BR). In some embodiments, the weight ratio of the cross-linked/crosslinkable styrene-butadiene rubber (SBR) and cross-linked/crosslinkable butadiene rubber (BR) is one of the factors that may influence the crystallinity and/or thermal property factor (Factor); however, the present disclosure is not limited thereto.

In some embodiments, the cross-linked/crosslinkable rubber comprises cross-linked/crosslinkable styrene-butadiene rubber (SBR) and cross-linked/crosslinkable butadiene rubber (BR), and the weight ratio of the cross-linked/crosslinkable SBR to the cross-linked/crosslinkable BR is in the range of higher than 0/100 to 90/10. In some embodiments, the cross-linked/crosslinkable rubber comprises cross-linked/crosslinkable styrene-butadiene rubber (SBR) and cross-linked/crosslinkable butadiene rubber (BR), and the weight ratio of the cross-linked/crosslinkable SBR to the cross-linked/crosslinkable BR is in the range of higher than 0/100 to 50/50. In some embodiments, the weight ratio of the cross-linked/crosslinkable SBR to the cross-linked/crosslinkable BR is in the range of 10/90 to 90/10. In some embodiments, a weight ratio of the cross-linked/crosslinkable SBR to the cross-linked/crosslinkable BR is in a range from 20/80 to 80/20. In some embodiments, the weight ratio of the cross-linked/crosslinkable SBR to the cross-linked/crosslinkable BR is in the range of 20/80 to 35/65. In some embodiments, a weight ratio of the cross-linked/crosslinkable SBR to the cross-linked/crosslinkable BR is in a range from 30/70 to 70/30, 30/70 to 60/40, 30/70 to 50/50 or 40/60 to 50/50.

In some embodiments, the thermoplastic material is thermoplastic polyester elastomer (TPEE), and the cross-linked/crosslinkable rubber is at least one selected from the group consisting of: cross-linked/crosslinkable styrene-butadiene rubber (SBR), cross-linked/crosslinkable butadiene rubber (BR), and cross-linked/crosslinkable nitrile butadiene rubber (NBR). In some embodiments, the thermoplastic material is thermoplastic polyester elastomer (TPEE), and the cross-linked/crosslinkable rubber comprises cross-linked/crosslinkable styrene-butadiene rubber (SBR) and cross-linked/crosslinkable butadiene rubber (BR).

In some embodiments of the present disclosure, the cross-linked rubber in the high-adhesion composition has an average particle diameter less than or equal to 100 μm dispersed in the matrix comprising the thermoplastic material. In some embodiments, the average particle diameter of the cross-linked rubber in the high-adhesion composition may be less than or equal to 30 μm. For example, the average particle diameter of the cross-linked rubber may be in a range from about 0.1 μm to 100 μm, 0.1 μm to 95 μm, 0.1 μm to 90 μm, 0.1 μm to 85 μm, 0.1 μm to 80 μm, 0.1 μm to 75 μm, 0.1 μm to 70 μm, 0.1 μm to 65 μm, 0.1 μm to 60 μm, 0.1 μm to 55 μm, 0.1 μm to 50 μm, 0.1 μm to 45 μm, 0.1 μm to 40 μm, 0.1 μm to 35 μm, 0.1 μm to 30 μm, 0.1 μm to 25 μm, 0.1 μm to 20 μm, 0.1 μm to 15 μm or 0.1 μm to 10 μm; but the present disclosure is not limited thereto.

In some embodiments, a weight ratio of the thermoplastic material to the cross-linked/crosslinkable rubber is in a range from 2:3 to 4:1. In some embodiments, a weight ratio of the thermoplastic material to the cross-linked/crosslinkable rubber is in a range from 5:5 to 4:1, 5:5 to 7.5:2.5, 5:5 to 7:3, 3:2 to 4:1, or 3:2 to 7:3. In some embodiments, the weight ratio of the thermoplastic material to the cross-linked/crosslinkable rubber is one of the factors that may influence the crystallinity and/or thermal property factor (Factor); however, the present disclosure is not limited thereto. When the weight ratio of the thermoplastic material to the cross-linked/crosslinkable rubber is within the above ranges, a balance between peel strength and anti-slip force can be achieved because the cross-linked rubber can provide the anti-slip effect. When the weight ratio of the thermoplastic material to the cross-linked rubber is within the above ranges, the structure of the dispersed cross-linked rubber in the matrix comprising the thermoplastic material can be obtained. However, when the weight ratio of the thermoplastic material to the cross-linked rubber is out of the aforesaid range, the thermoplastic material and the cross-linked rubber may be separated into two phases. In some embodiments, the weight ratio of the thermoplastic material to the cross-linked/crosslinkable rubber may be 2:3, 5:5, 3:2, 7:3, 7.5:2.5 or 4:1, but not limited thereto. As the content of the thermoplastic material is increased, the compatibility of the two layers of the adhesive-free multilayer composite is enhanced, so that the melt of the second layer can fully penetrate into the first layer, providing high adhesion between the first layer and the second layer when the first layer of the adhesive-free multilayer composite is formed by the high-adhesion composition of the present disclosure.

### Crosslinking co-agent

In some embodiments, the high-adhesion composition is obtained by reacting a mixture, wherein the mixture may further comprise a crosslinking co-agent.

The crosslinking co-agent serves to promote the progress of the crosslinking reaction and may also affect the degree of crosslinking of the high-adhesion composition. In some embodiments, the crosslinking co-agent is one of the factors that may influence the toluene insoluble content; however, the present disclosure is not limited thereto.

In some embodiments, the crosslinking co-agent is at least one having a structure selected from the group consisting of: a bismaleimide structure, an alcohol structure, and an acrylate structure; but the present disclosure is not limited thereto. In some embodiments, a content of the crosslinking co-agent is less than 3 wt% based on a total weight of the high-adhesion composition.

In some embodiments, the content of the crosslinking co-agent may be less than 3 wt%, less than 2.5 wt%, less than 2 wt% or less than 1.5 wt% based on the total weight of the high-adhesion composition. In some embodiments, the content of the crosslinking co-agent may be in a range from 0.1 wt% to 3 wt%, 0.2 wt% to 2.5 wt%, 0.2 wt% to 2 wt%, 0.2 wt% to 1.5 wt%, 0.25 wt% to 2.5 wt%, 0.25 wt% to 2 wt% or 0.25 wt% to 1.5 wt% based on the total weight of the high-adhesion composition. When the crosslinking co-agent is used outside the above ranges, over-crosslinking occurs, resulting in the

first layer formed by the high-adhesion composition having poor adhesion strength. When the amount of crosslinking co-agent is used within the above ranges, the first layer formed by the high-adhesion composition provides adequate strength and durability while not adversely affecting adhesion strength between the first layer and the second layer of the adhesive-free multilayer composite.

In some embodiments, the crosslinking co-agent is at least one having a structure selected from the group consisting of: a bismaleimide structure, an alcohol structure, and an acrylate structure. Examples of the crosslinking co-agent comprising the bismaleimide structure may comprise aromatic bismaleimide, such as N, N '- m-phenylene bismaleimide, but the present disclosure is not limited thereto. Examples of the crosslinking co-agent comprising the alcohol structure may comprise linear alcohol, such as $C_{8-18}$ linear alcohol, which may be selectively ethoxylated or propoxylated, but the present disclosure is not limited thereto. Examples of the crosslinking co-agent comprising the acrylate structure may comprise polyfunctional acrylate, but the present disclosure is not limited thereto. The term 'polyfunctional acrylate' refers to an acrylate having two or more acrylate groups. In some embodiments, the polyfunctional acrylate may be a difunctional acrylate or a trifunctional acrylate, but the present disclosure is not limited thereto. In some embodiments, the difunctional acrylate may be a poly(alkylene glycol) diacrylate, such as poly(ethylene glycol) di-acrylate, but the present disclosure is not limited thereto. In some embodiments, the trifunctional acrylate may be a triol-based acrylate, such as trimethylolpropane trimethacrylate, but the present disclosure is not limited thereto.

### Crosslinking agent

In some embodiments, the high-adhesion composition is obtained by reacting a mixture, wherein the mixture may further comprise a crosslinking agent. In some embodiments, the crosslinking agent is one of the factors that may influence the toluene insoluble content; however, the present disclosure is not limited thereto.

In some embodiments, the content of the crosslinking agent may be less than 3 wt%, less than 2.5 wt%, less than 2 wt%, less than 1.5 wt% or less than 1 wt% based on the total weight of the high-adhesion composition. In some embodiments, the content of the crosslinking agent may be in a range from 0.01 wt% to 3 wt%, 0.01 wt% to 2.5 wt%, 0.01 wt% to 2 wt%, 0.01 wt% to 1.5 wt%, 0.01 wt% to 1 wt%, 0.02 wt% to 3 wt%, 0.02 wt% to 2.5 wt%, 0.02 wt% to 2 wt%, 0.02 wt% to 1.5 wt% or 0.02 wt% to 1 wt% based on the total weight of the high-adhesion composition.

In some embodiments, the crosslinking agent may be peroxide, resole type phenolic resin, sulphur, silicon hydride, or other crosslinking agent suitable for crosslinking known in the art; but the present disclosure is not limited thereto. In some embodiments, the crosslinking agent may be peroxide. In some embodiments, the crosslinking agent may be dialkyl peroxide, such as 2,5-dimethyl-2,5-bis(tert-butylperoxy)hexane, but the present disclosure is not limited thereto.

### Elastomer

In some embodiments, the high-adhesion composition is obtained by reacting a mixture, wherein the mixture may further selectively comprise an elastomer. Herein, the elastomer existed in the matrix comprising the thermoplastic material is used as a surfactant to improve the compatibility between the two layers of the adhesive-free multilayer composite, thereby improving the adhesion between the two layers thereof. In addition, the high-adhesion composition obtained by reacting a mixture comprising elastomer may optimize the melt rheological properties to improve processing fluidity. In some embodiments, the elastomer is one of the factors that may influence a slope of a melt viscosity-temperature curve of the high-adhesion composition; however, the present disclosure is not limited thereto.

In some embodiments, the elastomer may be least one selected from the group consisting of: non-hydrogenated styrene block copolymer (SBC), hydrogenated styrene block copolymer (HSBC), ethylene-vinyl acetate copolymer (EVA), thermoplastic polyurethane (TPU) and polyolefin elastomer (POE); but the present disclosure is not limited thereto. In some embodiments, the elastomer may be at least one selected from the group consisting of: thermoplastic polyurethane (TPU), hydrogenated styrene block copolymer (HSBC) and ethylene-vinyl acetate copolymer (EVA). In some embodiments, the non-hydrogenated styrene block copolymer (SBC) may be a styrene-butadiene block copolymer, or a styrene-isoprene block copolymer, but the present disclosure is not limited thereto. In some embodiments, the hydrogenated styrene block copolymer (HSBC) may be a styrene-butadiene hydrogenated block copolymer, or a styrene-isoprene hydrogenated block copolymer, but the present disclosure is not limited thereto.

In some embodiments, the elastomer may selectively have at least one terminal functional group selected from the group consisting of maleic anhydride group, acrylic acid group and epoxy group; but the present disclosure is not limited thereto. In some embodiments, the elastomer is a hydrogenated styrene triblock copolymer grafted by maleic anhydride (MA).

In some embodiments, the content of the elastomer may be in a range from 0.5 wt% to 80 wt%, 10 wt% to 80 wt%, 10 wt% to 70 wt%, 20 wt% to 70 wt%, 30 wt% to 70 wt%, 40 wt% to 70 wt% or 40 wt% to 60 wt% based on the total weight of the high-adhesion composition.

**Other additive**

In some embodiments, the high-adhesion composition is obtained by reacting a mixture, wherein the mixture may further selectively comprise an additive selected from the group consisting of: a tackifier resin, an impact toughness modifier, an anti-scorch agent, a filler, a compatibilizer, a lubricant, an antioxidant, a processing oil, and a combination thereof. In some embodiments, the high-adhesion composition is obtained by reacting a mixture, wherein the mixture may further comprise a tackifier resin, an impact toughness modifier or a combination thereof.

In some embodiments, the high-adhesion composition is obtained by reacting a mixture, wherein the mixture may further comprise a tackifier resin. The tackifier resin is not particularly limited as long as it is a resin that is capable of promoting viscosity and increasing adhesion of the high-adhesion composition of the present disclosure. In some embodiments, the tackifier resin is selected from the group consisting of: a rosin-based resin, a terpene-based resin, a hydrocarbon resin, a phenolic resin, and a combination thereof.

In some embodiments, the rosin-based resin can be a material produced from plants, such as pine trees, including pine gum, wood rosin, and tall rosin oil. The rosin-based resin can be modified with functional group optionally to enhance the compatibility in the high-adhesion composition, wherein the functional group is selected from a hydroxyl group, a carbonyl group, and an ether group; and the carbonyl group is at least one selected from the group consisting of a maleic group, a carboxyl group, and an ester group. In some embodiments, the rosin-based resin can be fully hydrogenated or partially hydrogenated optionally; but the present disclosure is not limited thereto.

In some embodiments, the terpene-based resin can be chosen from a polyterpene homopolymer, a copolymer of terpene with a diene monomer, and a phenolic-modified terpene resin.

In some embodiments, the hydrocarbon resin can be selected from the groups consisting of: an aliphatic resin, a cycloaliphatic resin, an aromatic resin, and a combination thereof. Specifically, the hydrocarbon resin can be a $C_{5-9}$ aliphatic resin, a $C_9$ aromatic resin, or a combination of a $C_5$ aliphatic resin and a $C_9$ aromatic resin. In some embodiments, the hydrocarbon resin can optionally be hydrogenated or partially hydrogenated. However, the present disclosure is not limited thereto.

In some embodiments, when the high-adhesion composition is obtained by reacting a mixture, wherein the mixture further comprises a tackifier resin, the content of the tackifier resin may be in a range from 1.5 wt% to 10 wt% based on the total weight of the high-adhesion composition, and the content of the tackifier resin may be adjusted according to the needs.

In some embodiments, the high-adhesion composition is obtained by reacting a mixture, wherein the mixture may further comprise an impact toughness modifier. The impact toughness modifier is not particularly limited as long as it is an agent that is capable of promoting compatibility of the high-adhesion composition of the present disclosure. In some embodiments, the impact toughness modifiers can be a nonpolar or polar olefin homopolymer and/or copolymer. In some embodiments, the impact toughness modifier may be a natural rubber, polybutadiene, polyisoprene, polyisobutylene, a mixed polymer of butadiene and/or isoprene with styrene or styrene derivatives and other comonomers, a hydrogenated mixed polymer and/or a mixed polymer, ethylene propylene rubber, ethylene propylene diene rubber, ethylene octene rubber or ethylene vinyl acetate rubber, or $\alpha$-olefin copolymer. In some embodiments, the impact toughness modifier can be grafted optionally by functional group, such as carboxylic-acid, acid anhydrides, or (meth)acrylic acid, but not limited thereto.

In some embodiments, when the high-adhesion composition is obtained by reacting a mixture, wherein the mixture comprises an impact toughness modifier, the content of the impact toughness modifier is in a range from 2 wt% to 10 wt% based on the total weight of the high-adhesion composition, and the content of the impact toughness modifier may be adjusted according to the needs.

In some embodiments, the high-adhesion composition is obtained by reacting a mixture, wherein the mixture may further comprise an anti-scorch agent. The anti-scorch agent is not particularly limited, and examples thereof can be an acyl imine compound such as N-cyclohexylthiophthaloimide, an alkylamine alkylphenol compound, a quinone-containing compound, 2,4-bis(3-isopropylphenyl)-4-methyl-1-pentene, or a nitroxide-containing compound, such as 2,2,6,6-tetramethylpiperidin-1-yl)oxyl (TEMPO), 4-hydroxy-2,2,6,6-tetramethylpiperidin-1-oxyl (4-hydroxy-TEMPO). These anti-scorch agents can be used alone or in combination of two or more. In some embodiments, a total amount of the anti-scorch agent is in the range from 0.005 wt% to 5 wt% or 0.009 wt% to 1 wt%, based on a total weight of the high-adhesion composition.

In some embodiments, the high-adhesion composition is obtained by reacting a mixture, wherein the mixture may further comprise a compatibilizer. The compatibilizer is not particularly limited, and examples thereof can be selected from the group consisting of: a polyamide resin, a styrene-based polymer resin, a methacrylate compounds such as 2-hydroxyethyl methacrylate (HEMA), a tertiary amines compound, and a secondary diamines compound. In some embodiments, the styrene-based polymer resin having a molecular weight of 10,000 or greater can be optionally grafted by maleic anhydride. In some embodiments, a content of the compatibilizer is in the range from 2 to 5 wt% based on a total weight of the high-adhesion composition.

In some embodiments, the high-adhesion composition is obtained by reacting a mixture, wherein the mixture may further comprise a lubricant. The lubricant is not particularly limited, and examples thereof can be paraffin, paraffin wax, polyethylene wax or synthetic hydrocarbon lubricant; stearic acid alkyl ester such as a $C_{10-30}$ fatty acid ester lubricant; phosphorus acid amide, oleic acid amide, erucic acid amide or a fatty acid amide lubricant; calcium stearate, magnesium stearate, zinc stearate or the like of the metal soap-based lubricant; a phosphoric acid ester-based lubricant such as polyoxyethylene lauryl ether phosphorus acid, polyoxyethylene oleyl ether phosphorus acid, a higher alcohol phosphoric acid; and the like. These lubricants can be used alone or in combination of two or more. The amount added can be appropriately selected according to the purpose of use. However, it is usually in the range from 0.0001 wt% to 10 wt% or 0.01 wt% to 1 wt% based on a total weight of th high-adhesion composition.

In some embodiments, the high-adhesion composition is obtained by reacting a mixture, wherein the mixture may further comprise a filler. The filler is not particularly limited, and examples thereof can be a reinforcing filler, a non-reinforcing filler, and the like. Examples of the reinforcing filler include: carbon black such as furnace black, acetylene black, thermal black, channel black, and graphite; silica such as wet silicon oxide, dry silicon oxide, and silica gel; etc. Examples of the non-reinforcing filler include: quartz powder, diatomaceous earth, zinc oxide, alkaline magnesium carbonate, activated calcium carbonate, magnesium silicate, aluminum silicate, titanium dioxide, talc, aluminum sulfate, calcium sulfate, barium sulfate, etc. In some embodiments, a content of the filler is in a range from 0.1 wt% to 10 wt% based on the total weight of the high-adhesion composition. In some embodiments, the filler is silica, and a content of the silica is in a range from 0.1 wt% to 10 wt% based on the total weight of the high-adhesion composition.

In some embodiments, the high-adhesion composition is obtained by reacting a mixture, wherein the mixture may further comprise an antioxidant. The antioxidant is not particularly limited, and examples thereof can be a primary antioxidant or a secondary antioxidant. Examples of secondary antioxidants include the organophosphorous (e.g., phosphites, phosphonites) and organosulfur classes of compounds. The phosphorous and sulfur atoms of these compounds react with peroxides to convert the peroxides into alcohols. In some embodiments, examples of antioxidants include benzeneproanolc acid, 3-(1,1-dimethylethy)-4-hydroxy-5-methyl-,2,4,8,10-tetraoxaspiro[5.5]undecane-3,9-diyl-bis(2,2-dimethyl-2,1-ethanediyl)ester (JAK Chemicals - AO20), bis (2,4-dicumylphenyl) pentaerythritol diphosphite (S9228), 3,9-bis(2-(3-(3-tert-butyl-4-hydroxy-5-methylphenyl)propionyloxy-1,1-dimethylethyl)-2,4,8,10-tetraoxaspiro [5.5]undecane (AO80) or a combination thereof. In some embodiments, a content of antioxidants is 0.01 wt% to 1 wt% based on a total weight of the high-adhesion composition.

In some embodiments, the high-adhesion composition is obtained by reacting a mixture, wherein the mixture may further comprise a processing oil. The processing oil can be any oil that is conventionally used in manufacturing high-adhesion composition, but the disclosure is not particularly limited. Example of processing oil can be selected from the group consisting of mineral oils, soybean oil, naphthenic oils, paraffinic oils, aromatic oils, castor oils, rapeseed oils, triglyceride oils, and a combination thereof. In some embodiments, a content of the processing oil is 2 wt% to 30 wt% based on the total weight of the high-adhesion composition. In some embodiments, the processing oil is one of the factors that may influence the crystallinity and/or thermal property factor (Factor); however, the present disclosure is not limited thereto.

## Properties

### Toluene insoluble content

In some embodiments, the high-adhesion composition has a toluene insoluble content equal to or higher than 10%. In some embodiments, the high-adhesion composition has a toluene insoluble content equal to or higher than 20%, 30% or 40%. In some embodiments, the high-adhesion composition has a toluene insoluble content less than 99%, 95% or 90%. In some embodiments, the toluene insoluble content is in a range from 10% to 99%, 20% to 99%, 30% to 99%, 40% to 99%, 10% to 90%, 20% to 90%, 30% to 90%, 40% to 90%. When the toluene-insoluble content is outside the above ranges, it may result in the first layer formed by the high-adhesion composition having poor adhesion strength or even failure to adhere to the second layer of the adhesive-free multilayer composite.

Herein, the term "toluene insoluble (TI) content" is used to measure the crosslinking degree of the high-adhesion composition. In some embodiments, the TI content is at least in part influenced by a reaction conducted in the presence of a crosslinking agent and/or crosslinking co-agent. Within the above ranges, as the TI content is lower and the crosslinking degree is lower in the first layer formed by the high-adhesion composition, and thus the two layers can mutually interpenetrate polymer network, providing high adhesion between the first layer and the second layer.

### Melting point, heat of melting point, crystallization peak and heat of crystallization peak

In some embodiments, the high-adhesion composition has a melting point ($T_{m1}$) in a range from 110 °C to 180 °C, and a heat ($\Delta H_{Tm1}$) of the melting point from 110 °C to 180 °C is in a range from 1 J/g to 40 J/g, for example, 2 J/g to 40 J/g, 2

J/g to 30 J/g, 2 J/g to 20 J/g, 2 J/g to 10 J/g, or 2.5 J/g to 6 J/g. In some embodiments, the high-adhesion composition has a melting point ($T_{m1}$) in the range from 120 °C to 180 °C, and the heat ($\Delta H_{Tm1}$) of the melting point from 120 °C to 180 °C is in the range from 1 J/g to 40 J/g. In some embodiments, the high-adhesion composition has a melting point ($T_{m1}$) in the range from 135 °C to 150 °C, and the heat ($\Delta H_{Tm1}$) of the melting point from 135 °C to 150 °C is in the range from 3 J/g to 8 J/g. When the heat of the melting point ($T_{m1}$) and/or a heat ($\Delta H_{Tm1}$) of the melting point is outside the above range, it may result in poor adhesion strength or even failure to adhere to the second layer when the high-adhesion composition is used to form the first layer of the adhesive-free multilayer composite.

In some embodiments, the high-adhesion composition has a melting point ($T_{m2}$) in the range from -10°C to -25 °C, and a heat ($\Delta H_{Tm2}$) of the melting point from -10°C to -25 °C is less than 25 J/g. In some embodiments, the high-adhesion composition has a melting point ($T_{m2}$) in the range from -13 °C to -22 °C, and the heat ($\Delta H_{Tm2}$) of the melting point from -13 to -22 °C is in the range of 0 J/g to 21 J/g. In another embodiment, the high-adhesion composition has a melting point ($T_{m2}$) in the range from - 19 to -22 °C, and the heat ($\Delta H_{Tm2}$) of the melting point from -19 °C to -22 °C is in the range of 0 J/g to 2.5 J/g. When the heat of the melting point ($T_{m2}$) and/or a heat ($\Delta H_{Tm2}$) of the melting point is outside the above range, it may result in poor adhesion strength or even failure to adhere to the second layer when the high-adhesion composition is used to form the first layer of the adhesive-free multilayer composite.

In some embodiments, the high-adhesion composition has a crystallization peak ($T_c$) in a range from 75 °C to 120 °C, and a heat of the crystallization peak ($\Delta H_{crystal}$) from 75 °C to 120 °C is in a range from 1.5 J/g to 40 J/g, for example, 2 J/g to 40 J/g, 3 J/g to 40 J/g, 4 J/g to 40 J/g, 4 J/g to 30 J/g, 4 J/g to 20 J/g, or 4 J/g to 10 J/g. In some embodiments, the high adhesion composition has a crystallization peak ($T_c$) in the range from 75 °C to 120 °C, and the heat ($\Delta H_{crystal}$) of the crystallization peak from 75 °C to 120 °C is in the range from 2 J/g to 40 J/g. In some embodiments, the high adhesion composition has a crystallization peak ($T_c$) in the range of 75 °C to 104 °C, and the heat of the crystallization peak from 75 °C to 104 °C is in the range of 4 J/g to 11.5 J/g. When the heat of the crystallization peak is outside the above range, it may result in poor adhesion strength or even failure to adhere to the second layer when the high-adhesion composition is used to form the first layer of the adhesive-free multilayer composite.

In some embodiments, the high-adhesion composition may have a Factor in a range from 0.3 to 25, calculated by the following equation (I):

$$\mathbf{Factor} = -0.7879 \times T_{m2} + 0.1271 \times \Delta H_{Tm1} - 0.0514 \times \Delta \boldsymbol{H}_{\boldsymbol{Tm}2} + 0.1248 \times \Delta \boldsymbol{H}_{crystal} \quad (\mathrm{I})$$

wherein $T_{m2}$ is a melting point of the high-adhesion composition in a range from -10 °C to -25 °C;
$\Delta H_{Tm1}$ is a heat of a melting point of the high-adhesion composition in a range from 110 °C to 180 °C;
$\Delta H_{Tm2}$ is a heat of the melting point of the high-adhesion composition in a range from -10 °C to -25 °C; and
$\Delta H_{crystal}$ is a heat of a crystallization peak of the high-adhesion composition in a range from 75 °C to 120 °C.

In some embodiments, the high-adhesion composition may have a Factor in a range from 1 to 25 calculated by the above equation (I). In some embodiments, the high-adhesion composition may have a Factor in a range from 15 to 20 calculated by the above equation (I). In some embodiments, the high-adhesion composition has a Factor higher than 16.5, for example, from 16.5 to 20 calculated by the above equation (I). When the Factor falls within the above ranges, the first layer formed by the high-adhesion composition has adequate adhesion strength between the first layer and the second layer of the adhesive-free multilayer composite.

In some embodiments, the high-adhesion composition may have one melting point (for example, $T_{m1}$). In this case, $T_{m2}$ and $\Delta H_{Tm2}$ are considered as 0 to calculate the Factor by the above equation (I).

In the present disclosure, the melting point ($T_{m1}$,$T_{m2}$), the crystallization peak ($T_c$), the heat of melting point ($\Delta H_{Tm1}$, $\Delta H_{Tm2}$) and the heat ($\Delta H_{crystal}$) of the crystallization peak afore-mentioned may be measured by differential calorimetric analysis (DSC) according to the standard ISO 11357-3: 2018.

In some embodiment, the high-adhesion composition has a melting onset temperature in a range from 90°C to 140 °C, and a slope of a melt viscosity-temperature curve at a temperature above the melting onset temperature ranges from -1 to -6. When the slope falls within the above ranges, the fluidity of the high-adhesion composition may be improved, demonstrating good processing flow performance, and making the composition suitable for manufacturing articles having a reduced thickness. In some embodiments, the slope of a melt viscosity-temperature curve is at least in part influenced by the degree of crosslinking. In some embodiments, the melting onset temperature may be in a range from 99°C to 130 °C, and a slope of a melt viscosity-temperature curve ranges from -1.5 to -5.5, -1.5 to - 5, or -3 to -5 at a temperature in a range from higher than the aforesaid melting onset temperature to 160°C. In some embodiments, the aforesaid high-adhesion composition is obtained by reacting a mixture comprising the elastomer, wherein the melting onset temperature may be in a range from 90°C to 110 °C, and a slope of a melt viscosity-temperature curve ranges from -2 to -6, -3 to -6, or -3 to -5 at a temperature in a range from higher than the aforesaid melting onset temperature to 160°C.

When the aforesaid high-adhesion composition is used for forming the first layer of the adhesive-free multilayer composite of the present disclosure, it is considered that the crystalline of the first layer has an effect on the entanglement degree of the amorphous chain between the first layer and the second layer when the melt of the second layer contacts the first layer during the injection molding process. In detail, if the high-adhesion composition of the first layer has the melting point higher than 180 °C and/or the Factor outside a range from 0.3 to 25, the crystalline on the surface of the first layer cannot be melted before temperature balancing; therefore, the melt of the second layer cannot fully permeate into the first layer, and resulting in a low entanglement degree and poor peel strength between the first layer and the second layer.

**Adhesive-free multilayer composite**

Also within the scope of the present disclosure is an adhesive-free multilayer composite, comprising: a first layer comprising the aforesaid high-adhesion composition; and a second layer formed on the first layer, wherein a peel strength between the first layer and the second layer is greater than or equal to 0.5 N/mm. Herein, the thermoplastic material of the aforesaid high-adhesion composition can provide abrasion resistance, and the cross-linked rubber thereof can provide slip resistance. In addition, the present disclosure also provides an article, comprising the aforesaid adhesive-free multilayer composite. The article may be used in any field that can utilize its high adhesion. The use may include, but not limited to, footwear product, and hand tool.

In some embodiments, the peel strength between the first layer and the second layer is greater than 0.5 N/mm and lower than 10 N/mm. In some embodiments, the peel strength between the first layer and the second layer may be greater than 2.5 N/mm. In some embodiments, the peel strength between the first layer and the second layer may be in a range from about 0.6 N/mm to 8 N/mm, 1 N/mm to 10 N/mm, 1.5 N/mm to 10 N/mm, 2 N/mm to 10 N/mm, 2.5 N/mm to 10 N/mm, 2.6 N/mm to 10 N/mm, 4 N/mm to 10 N/mm, 0.6 N/mm to 8 N/mm, 1 N/mm to 8 N/mm, 1.5 N/mm to 8 N/mm, 2 N/mm to 8 N/mm, 2.5 N/mm to 8 N/mm, 2.6 N/mm to 8 N/mm, or 4 N/mm to 8 N/mm; but the present disclosure is not limited thereto.

In the present disclosure, the term "peel strength" is used to measure the bond strength between the first layer and the second layer.

In some embodiments, the adhesive-free multilayer composite does not comprise any adhesive for bonding between the first layer and the second layer.

In the present disclosure, the high-adhesion composition having certain range of toluene insoluble content and/or thermal properties provides higher melting strength during manufacturing process; and thereby, adhesive-free multilayer composite of the present disclosure shows high adhesion without the use of any rubber treatment agent or adhesives between the first layer and the second layer, specifically, a peel strength between the first layer and the second layer is greater than 0.5 N/mm, even greater than 2.5 N/mm.

Besides, when the first layer of the adhesive-free multilayer composite is formed by the aforesaid high-adhesion composition, the adhesive-free multilayer composite of the present disclosure also shows excellent slip resistance, thereby improving the operation in the use of hand tool and meeting the requirement in the use of footwear. Thus, in some embodiments, the article may be a hand tool. In one embodiment, the article is a handle part of hand tool.

In some embodiments, the article may be a shoe sole. In some embodiments, the article may be a footwear, wherein the first layer is a shoe outsole, and the second layer is a shoe midsole.

The aforesaid article is manufactured without the use of adhesives, and provides improved durability, thereby reducing production costs, and meeting environmental protection requirements.

In some embodiment, the second material for forming the second layer is a material having specific melt strength under the temperature between 95°C to 230 °C in injection molding for moldability. In some embodiments, the second layer may be formed from a second material selected from the group consisting of: thermoplastic polyester elastomer (TPEE), thermoplastic polyurethane (TPU), ethylene vinyl acetate copolymer (EVA), olefin block copolymer (OBC), polycaprolactam (PA6), hydrogenated styrene block copolymer (HSBC) and a combination thereof. In some embodiments, the olefin block copolymer (OBC) may be a block copolymer derived from ethylene and C4-C8 $\alpha$-olefin. In some embodiments, the hydrogenated styrene block copolymer (HSBC) may be a styrene-butadiene hydrogenated block copolymer, or a styrene-isoprene hydrogenated block copolymer, but the present disclosure is not limited thereto. In some embodiments, the second material may be mixed with other ingredients for enhancing the mechanical strength, such as glass fiber; but the present disclosure is not limited thereto. In some embodiments, the second material may be modified by functional groups, such as maleic anhydride group; but the present disclosure is not limited thereto.

In some embodiments, the second layer can be a solid layer or a foam, but the form of the second layer is not limited thereto.

In some embodiments, the second layer may be a foam, and a material of the foam is selected from the group consisting of: thermoplastic polyester elastomer (TPEE), thermoplastic polyurethane (TPU) and a combination thereof.

In some embodiments, the first layer may comprise a material the same as a material of the second layer. For example, an ingredient in the high-adhesion composition for forming the first layer may be the same as an ingredient in the

material of the second layer. As the content of the material the same as the second layer in the first layer is increased, the compatibility of the first layer and the second layer is enhanced, thus providing high adhesion between the first layer and the second layer.

In some embodiment, when the first layer and second layer are non-foaming layers, the high-adhesion composition in the first layer has a melting point in a range from 110 °C to 180 °C and the heat of the melting point thereof is greater than 1 J/g. In some embodiments, when the first layer and second layer are non-foaming layers, the high-adhesion composition in the first layer has a melting point in a range from 110 °C to 180 °C and the heat of the melting point thereof is in a range from 1 J/g to 40 J/g.

Also within the scope of the present disclosure is a method for manufacturing the aforesaid adhesive-free multilayer composite, comprising the following steps: providing a first material and a second material, wherein the first material comprises the aforesaid high-adhesion composition; and performing an injection molding process on the first material and the second material at a temperature between 160°C and 230 °C to obtain the aforesaid adhesive-free multilayer composite.

In some embodiments, the step of performing the injection molding process on the second material is conducted with a foaming agent presented in supercritical fluid (SCF) state to form a foam.

When the adhesive-free multilayer composite is formed by the injection molding process, the chain segments diffuse and entangle with each other at the interface of the first layer and the second layer, thus causing the first layer and the second layer to adhere to each other and resulting in high peel strength. If the degree of crystallization and/or degree of cross-linking of the first material of the first layer is too high, the chain segments will be restricted, which will reduce the adhesion at the interface of the first layer and the second layer.

Hereinafter, several methods for forming the aforesaid adhesive-free multilayer composite are provided, but the present disclosure is not limited thereto.

**Method 1 (M1)**

The aforesaid high-adhesion composition as the first material and the aforesaid second material are provided, wherein the high-adhesion composition is formed by a reactive compounding process on the ingredients of the aforesaid mixture for the high-adhesion composition. Next, an injection molding process is performed, wherein the first material is placed into a mold to form the first layer, followed by injecting the second material to form the second layer on the first layer. Thus, the aforesaid adhesive-free multilayer composite can be obtained.

**Method 2 (M2)**

When the aforesaid mixture for the high-adhesion composition comprises an elastomer, the present method 2 is used. The high-adhesion composition is prepared by performing a reactive compounding process on the ingredients of the aforesaid mixture for the high-adhesion composition other than the elastomer, followed by performing a melt blending process with the elastomer to form the high-adhesion composition.

The aforesaid high-adhesion composition as the first material and the aforesaid second material are provided. Next, an injection molding process is performed, wherein the first material is placed into a mold to formed the first layer, followed by injecting the second material to form the second layer on the first layer. Thus, the aforesaid adhesive-free multilayer composite can be obtained.

**Method 3 (M3)**

When the second layer of the adhesive-free multilayer composite is a foam, the present method 3 is used.

The aforesaid high-adhesion composition as the first material and the aforesaid second material are provided, wherein the aforesaid mixture for the high-adhesion composition is formed by a reactive compounding process on the ingredients of the high-adhesion composition. In some embodiments, when the aforesaid mixture for the high-adhesion composition comprises an elastomer, the aforesaid mixture for the high-adhesion composition is prepared by performing a reactive compounding process on the ingredients of the aforesaid mixture for the high-adhesion composition other than the elastomer, followed by performing a melt blending process with the elastomer to form the high-adhesion composition.

Next, an injection molding process is performed, wherein the first material is placed into a mold to formed the first layer, followed by injecting the second material using a foaming agent to form the foam of the second layer on the first layer. Thus, the aforesaid adhesive-free multilayer composite can be obtained.

In some embodiments, the foaming agent may be a chemical foaming agent, a physical foaming agent, or a microsphere foaming agent, but the present disclosure is not limited thereto. In some embodiments, the step of performing the injection molding process on the second material is conducted with a foaming agent presented in supercritical fluid (SCF) state to form a foam. In some embodiments, a foaming agent presented in supercritical fluid (SCF) state may be

carbon dioxide ($CO_2$), or nitrogen ($N_2$), but the present disclosure is not limited thereto.

Herein, the impact force of injection molding may cause the second layer to collapse, so the first layer is formed first followed by forming the second layer.

In the aforesaid methods, the injecting temperature of the first material during the injection molding process may be in a range from about 160°C to 230 °C. In the aforesaid methods, the injecting temperature of the second material during the injection molding process may be in a range from about 160°C to 230 °C to form the second layer on the first layer. However, the present disclosure is not limited thereto, and the injection temperature of the injection molding process may be adjusted according to the melting point of the first material or the second material.

In the aforesaid methods, the equipment for performing the injection molding process is not particularly limited, and can be any processing equipment known in the art; but the present disclosure is not limited thereto.

In the present disclosure, the term "halogen" refers to a fluoro, chloro, bronco, or iodo radical.

In the present disclosure, the term "alkyl" herein refers to a linear or branched hydrocarbon group, containing 1-12 carbon atoms (e.g., C1-C10, C1-C8 and C1-C6). Examples include methyl, ethyl, n-propyl, i-propyl, n-butyl, i-butyl, and t-butyl.

In the present disclosure, the term "alkenyl" herein refers to linear or branched hydrocarbon groups with at least one double bond, and includes, for example, linear or branched C2-12 hydrocarbon groups with at least one double bond, linear or branched C2-8 hydrocarbon groups with at least one double bond, or linear or branched C2-6 hydrocarbon groups with at least one double bond. Examples of the alkenyl include, but are not limited to vinyl, propenyl or butenyl.

In the present disclosure, the term "alkynyl" herein refers to a linear or branched monovalent or bivalent hydrocarbon containing 2-20 carbon atoms (e.g., C2-C16, C2-C12, C2-C8, C2-C6 and C2-C4) and one or more triple bonds. Examples of alkynyl include, but are not limited to, ethynyl, ethynylene, 1-propynyl, 1- and 2-butynyl, and 1-methyl-2-butynyl.

In the present disclosure, the term "alkoxy" refers to an -O-alkyl group. Examples include methoxy, ethoxy, propoxy, and isopropoxy.

In the present disclosure, the term "cycloalkyl" refers to a saturated and partially unsaturated monocyclic, bicyclic, tricyclic, or tetracyclic hydrocarbon group having 3-12 (e.g., 3-10 and 3-7) carbon atoms. Examples include cyclopropyl, cyclobutyl, cyclopentyl, cyclopentenyl, cyclohexyl, cyclohexenyl, cycloheptyl, and cyclooctyl.

In the present disclosure, the term "heterocycloalkyl" refers to a nonaromatic 5-8 membered monocyclic, 8-12 membered bicyclic, or 11-14 membered tricyclic ring system having one or more heteroatoms (e.g., O, N, P, and S). Examples include piperazinyl, azepanyl, pyrrolidinyl, dihydrothiadiazolyl, dioxanyl, morpholinyl, and tetrahydrofuranyl.

In the present disclosure, the term "heteroaryl" refers to an aromatic 5-8 member monocyclic, 8-12 member bicyclic, or 11-14 member tricyclic system having one or more heteroatoms (for example, oxygen, nitrogen, phosphorus, and sulfur). Examples of the heteroaryl include thiophenyl, triazolyl, oxazolyl, thiadiazolyl, tetrazolyl, pyrazolyl, pyridyl, furyl, imidazolyl, benzimidazolyl, pyrimidinyl, thienyl, quinolinyl, indolyl, thiazolyl and benzothiazolyl.

In the present disclosure, the term "aryl" refers to a 6-carbon monocyclic, 10-carbon bicyclic, 14-carbon tricyclic aromatic ring system. Examples of aryl groups include phenyl, naphthyl, and anthracenyl.

In addition, alkyl, alkenyl, alkynyl, alkoxy, cycloalkyl, heterocycloalkyl, aryl or heteroatyl present in the compounds include both substituted and unsubstituted moieties, unless specified otherwise. Possible substituents may include, but are not limited to, alkyl, cycloalkyl, halogen, alkoxy, alkenyl, heterocycloalkyl, aryl, heteroaryl, ester, amino or carboxyl.

**Analysis**

**Measuring method of peel strength**

In the present disclosure, the equipment for measuring the peel strength is an universal testing machine (AG-X manufactured by Shimadzu Corporation). The measured peel strength is reported with significant figures to the second decimal place.

Herein, parameters for the peel strength measurement are as follows.

Fixture load: 500 N
Test piece tensile rate: 100 mm/min
Specimen clamp span: 30 mm
Thicknesses of the first layer and the second layer: 15 mm
Width of the adhesive-free multilayer composite: 90 mm
Standard method: ASTMD1876.

**Measuring method of $T_{m1}$, $T_{m2}$, $T_c$, $\Delta H_{Tm1}$, $\Delta H_{Tm2}$, $\Delta H_{crystal}$, Factor**

$T_{m1}$, $T_{m2}$, $T_c$, $\Delta H_{Tm1}$, $\Delta H_{Tm2}$, $\Delta H_{crystal}$ is measured by differential calorimetric analysis (DSC) according to standard ISO 11357-3: 2018. The measured value is reported with significant figures to the second decimal place.

Herein, parameters for the measurement are as follows.

Gas: $N_2$
$1^{st}$ cycle: 25-220°C, 10 °C /min
$2^{nd}$ cycle: 220-25°C, 10 °C /min
$3^{rd}$-$4^{th}$ cycle: repeat $1^{st}$-$2^{nd}$ cycle

**Differential scanning calorimetry (DSC)**

Melting temperature ($T_m$) and crystallization peak ($T_c$) are measured using differential scanning calorimetry (DSC) using commercially available equipment such as a TA Instruments Q2000 DSC. Typically, 6 to 10 mg of sample is sealed in an aluminum pan and loaded into the instrument at room temperature under $N_2$ condition.

Melting data (first heating cycle) is acquired by heating the sample to at least 30° C above its melting temperature at a heating rate of 10° C/min. The sample is held for at least 1 minutes at this temperature to destroy its thermal history

Crystallization data are acquired by cooling the sample from the melt to at least 50° C below the crystallization temperature at a cooling rate of 10° C/min. The sample is held at this temperature for at least 1 minute, and finally heated at 10° C/min to acquire additional melting data (second heating cycle). The endothermic melting transition (first heat ($\Delta H_{Tm1}$) and second heat ($\Delta H_{Tm2}$)) and exothermic crystallization transition (heat of crystallization ($\Delta H_{crystal}$)) are analyzed for onset of transition and peak temperature. The melting temperatures reported are the peak melting temperatures from the second heating cycle unless otherwise specified. For the sample displaying multiple peaks, the melting point (or melting temperature) is defined to be the peak melting temperature (i.e., associated with the largest endothermic calorimetric response in that range of temperatures) from the DSC melting trace.

The Factor of the sample is calculated by the following equation (I), which is reported with significant figures to the second decimal place:

$$\textbf{Factor} = -0.7879 \times T_{m2} + 0.1271 \times \Delta H_{Tm1} - 0.0514 \times \Delta \boldsymbol{H}_{\boldsymbol{Tm}2} + 0.1248 \times \Delta \boldsymbol{H}_{crystal} \quad \text{(I)}$$

**Measuring method of toluene insoluble (TI) content**

The proportion of toluene insoluble matter of the high-adhesion composition was obtained with the following method.

Specifically, first, approximately 1 g of the high-adhesion composition was collected, its weight (Wo) was weighed to the fourth decimal, and the weighed high-adhesion composition were placed in a 150-mesh wire net bag. Next, approximately 200 ml of toluene was poured into around shape flask having a volume of 200 ml, and a sample placed in the wire net bag was set in a Soxhlet extraction tube. The Soxhlet extraction was performed by applying heat to the flask with a mantle heater for 5 hours. After the extraction, the toluene was removed, and the sample was dried at a temperature of 120 °C. After the drying, the sample recovered from the wire net is a "toluene insoluble matter." The TI content percentage is calculated with the following equation (II), which is reported with significant figures to the second decimal place.

$$TI\ content\ (\%) = \frac{Weight\ of\ toluene\ insoluble\ matter}{Weight\ of\ sample\ (Wo)}\ \text{x}\ 100\% \quad \text{(II)}$$

**Measuring method of a slope of a melt viscosity-temperature curve**

In the present invention, the term "slope of the melt viscosity-temperature curve" refers to the value dη/dT obtained by measuring the melt viscosity of a sample at a plurality of temperature points within a predetermined temperature range under fixed shear conditions using a rotational rheometer according to ASTM D4440 with 25 mm diameter parallel plates, frequency 0.1 1/s and 1% strain, measured according to ASTM D4440 using a temperature sweep between 30 °C and 220 °C, and performing a linear regression analysis on the resulting viscosity-temperature (η-T) data to determine the slope of the regression line at a temperature in a range from higher than the aforesaid melting onset temperature to 160°C. The " melting onset temperature " is determined by the intersection point of the baseline before

transition and the inflection tangent in the resulting viscosity-temperature (η-T) data.

**Measuring method of vinyl content and styrene content of cross-linked/crosslinkable rubber**

The vinyl content and styrene content of the cross-linked/crosslinkable rubber were measured according to standard ISO 21561-1:2015, which is reported with significant figures to the second decimal place.

**Examples**

It should be noted that, in the present specification, when a component is described to have an element, it means that the component may have one or more of the elements, and it does not mean that the component has only one of the element, except otherwise specified.

In the present specification, except otherwise specified, the feature A "or" the feature B means the existence of the feature A or the existence of the feature B. The feature A "and/or" the feature B means the existence of the feature A, the existence of the feature B, or the existence of both the features A and B. The feature A "and" the feature B means the existence of both the features A and B. The term "comprise(s)", "comprising", "include(s)", "including", "have", "has" and "having" means "comprise(s)/comprising but is/are/being not limited to".

In the present disclosure, except otherwise specified, the terms "almost", "about" and "approximately" usually mean the acceptable error in the specified value determined by a skilled person in the art, and the error depends on how the value is measured or determined. In some embodiments, the terms "almost", "about" and "approximately" mean within 1, 2, 3 or 4 standard deviations. In some embodiments, the terms "almost", "about" and "approximately" mean within ±20%, within ±15%, within ±10%, within ±9%, within ±8%, within ±7%, within ±6%, within ±5%, within ±4%, within ±3%, within ±2%, within ±1%, within ±0.5%, within ±0.05% or less of a given value or range. The quantity given here is an approximate quantity, that is, without specifying "almost", "about" and "approximately", it can still imply "almost", "about" and "approximately". In addition, the terms "in a range of a first value to a second value", "from a first value to a second value" and the like mean the said range comprises the first value, the second value and other values between the first value and the second value. In the present specification, the numerical values used in the present disclosure cover the range of the number of significant digits rounded.

In addition, the features in different embodiments of the present disclosure can be mixed to form another embodiment.

**Material**

Thermoplastic materials for forming the high-adhesion composition used in the following examples are listed in the following Table 1.

Table 1

| Name | TPEE-1L1 | TPEE-1L2 | TPEE-1L3 | OBC-1L |
|---|---|---|---|---|
| Material | TPEE | TPEE | TPEE | OBC |
| Sources/ Product name | Shinkong Synthetic Fibers Corporation/ SHINITE DL4000 | Hetron Elastomer Co. / Hetroflex H75AMG | Hetron Elastomer Co. / Hetroflex H28DMG | Dow Chemicals Co. / Infuse 9530 |
| Tm (°C) | 145 | 152 | 170 | 115 |

Crosslinkable rubbers for forming the high-adhesion composition used in the following examples are listed in the following Table 2.

Table 2

| Name | ESBR-1L | BR-1L | NBR-1L | SBR-1L2 | BR-1L2 |
|---|---|---|---|---|---|
| Material | SBR | BR | NBR | SBR | BR |
| Sources/ Product name | Zeon Corporation /NIPOL® 1502 | KUMHO/ KBR-01 | NANTEX Industry Co./ NANCAR®1052 | LCY Chem/ T1043 | ChiMei Corporation/ KIBIPOL®PR040 |

(continued)

| Name | ESBR-1L | BR-1L | NBR-1L | SBR-1L2 | BR-1L2 |
|---|---|---|---|---|---|
| Material | SBR | BR | NBR | SBR | BR |
| Vinyl content (wt%) | 17 | 15 | 67 | 14.5 | 100 |
| Styrene content (wt%) | 25 | 0 | 0 | 40 | <1 |

Materials used for forming the second layer of the adhesive-free multilayer composite are listed in the following Table 3.

Table 3

| Name | TPU-1 | TPU-2 | TPEE-1 | TPEE-2 | EVA-1 | EVA-O | OBC-2L | PA-g |
|---|---|---|---|---|---|---|---|---|
| Mater ial | TPU | TPU | TPEE | TPEE | EVA | EVA/ OBC (70:30) | OBC | PA6/ Glass fiber (70:30) |
| Sourc es/ Pro- du ct name | BASF/ ELAS- TOLLAN ®9552 | Covestro/ Desmo- pan®93 85AU | Envalior / Ar- nitel®8 782 | Dupont/ Hy- trel®4 056 | Formosa Plastics Cor- porati on/ Tai- sox® 7320M | Formosa Plastics Corporatio n/ Tai- sox® 7320M<br>Dow Chemical s / Infuse®9 530 | Dow Chemi- cal s / In- fuse®9 530 | Nytex Composi tes co., LTD/ NYLOY ® NG-0033N |
| Tm(° C) | 165 | 164 | 166 | 154 | 96 | 102 | 115 | 220 |

The following Table 4 to Table 11 show the ingredients of the mixture for preparing the high-adhesion compositions used in the following examples.

Table 4 (unit: wt%)

| Item | Sample | 4-1 | 4-2 | 4-3 | 4-4 | 4-5 | 4-6 |
|---|---|---|---|---|---|---|---|
| Thermoplastic : Rubber Ratio | | 4:6 | 5:5 | 6:4 | 7:3 | 8:2 | 6:4 |
| Rubber | ESBR-1L | 45 | 39 | 33 | 26 | | 33 |
| | BR-1L | | | | | 18 | |
| Thermoplastic material | TPEE-1L1 | 30.8 | 38.8 | 48.8 | 59.8 | | 49.81 |
| | TPEE-1L2 | | | | | 69.71 | |
| Processing Oil | HyPrene L2000 (naphthenic and paraffinic oils) | 22 | 20 | 16 | 13 | 9 | 15 |
| Peroxide | CR PP-20X (80%POLYPROPYLENE+20 % 2,5-Dimethyl-2,5-bis(tert-butvlperoxv)hexane) | 0.2 | 0.2 | 0.2 | 0.2 | 0.1 | 0.2 |
| Crosslinking co-agent | Atnen PDM-75 (75% N, N '-m-phenylene bismaleimide+25% Ethylene propylene terpolymer) | 2 | 2 | 2 | 1 | 1.2 | |
| Anti-scorch agent | MERCK TEMPO (2,2,6,6-Tetramethylpiperidinooxy) | | | | | 0.03 | 0.03 |
| Filler | SILVERBOND 925 (Silica) | | | | | 0.86 | 0.86 |
| Antioxidant | JAK Chemicals - AO20 (Benzeneproanolc acid, 3-(1,1-dimethylethy)-4-hydroxy-5-methyl-, 2,4,8,10-tetraoxaspiro[5.5]undecane-3,9-diylbis(2,2-dimethyl-2,1-ethanediyl)ester) | | | | | 0.1 | 0.1 |
| | S9228 (Bis (2,4-dicumylphenyl) pentaerythritol diphosphite) | | | | | 0.2 | 0.2 |
| Lubricant | RBW 102 (a polar modified lubricant) | | | | | 0.2 | 0.2 |
| | KAO lubricant EB-FF(a kind of lubricant amide) | | | | | 0.6 | 0.6 |

Table 5 (unit: wt%)

| Item | Sample | 5-1 | 5-2 | 5-3 | 5-4 | 5-5 |
|---|---|---|---|---|---|---|
| Thermoplastic : Rubber Ratio | | 6:4 | 7.5:2.5 | 7:3 | 8:2 | 8:2 |
| Rubber | ESBR-1L | 33 | | 5 | | |
| | BR-1L | | 22 | 18 | 17.7 | 17.3 |
| Thermoplastic material | TPEE-1L1 | 48.81 | | | | |
| | OBC-1L | | 66.01 | | | |
| | TPEE-1L2 | | | | 72.14 | 70.16 |
| | TPEE-1L3 | | | 65.01 | | |
| Elastomer | EVA-1 | | | | | *0.55* |
| Processing Oil | HyPrene L2000 (naphthenic and paraffinic oils) | 15 | 9 | 8 | 6.9 | 8.6 |
| Peroxide | CR PP-20X (80%POLYPROPYLENE+20% 2,5-Dimethyl-2,5-bis(tert-butylperoxy)hexane) | 0.2 | 1 | 1 | 0.1 | 0.4 |

(continued)

| Item | Sample | 5-1 | 5-2 | 5-3 | 5-4 | 5-5 |
|---|---|---|---|---|---|---|
| Crosslinking co-agent | Atnen PDM-75 (75% N, N '- m-phenylene bismaleimide+25% Ethylene propylene terpolymer) | 1.0 | | 1 | 1.2 | 1 |
| Anti-scorch agent | MERCK TEMPO (2,2,6,6-Tetramethylpiperidinooxy) | 0.03 | 0.03 | 0.03 | 0.03 | 0.03 |
| Filler | SILVERBOND 925 (Silica) | 0.86 | 0.86 | 0.86 | 0.85 | 0.86 |
| Antioxidant | JAK Chemicals - AO20 (Benzeneproanolc acid, 3-(1,1-dimethylethy)-4-hydroxy-5-methyl-, 2,4,8,10-tetraoxaspiro[5.5]undecane-3,9-diyl-bis(2,2-dimethyl-2,1-ethanediyl)ester) | 0.1 | 0.1 | 0.1 | 0.1 | 0.1 |
| | S9228 (Bis (2,4-dicumylphenyl) pentaerythritol diphosphite) | 0.2 | 0.2 | 0.2 | 0.19 | 0.2 |
| Lubricant | RBW 102 (a polar modified lubricant) | 0.2 | 0.2 | 0.2 | 0.19 | 0.2 |
| | KAO lubricant EB-FF(a kind of lubricant amide) | 0.6 | 0.6 | 0.6 | 0.6 | 0.6 |

Table 6 (unit: wt%)

| Item | Sample | 6-1 | 6-2 | 6-3 | 6-4 | 6-5 | 6-6 |
|---|---|---|---|---|---|---|---|
| Thermoplastic : Rubber Ratio | | 8:2 | 8:2 | 8:2 | 8:2 | 7:3 | 7:3 |
| Rubber | ESBR-1L | | | | | 8.64 | 8.46 |
| | BR-1L | 19 | 17 | 17 | 15 | 16.15 | 15.83 |
| Thermoplastic material | TPEE-1L2 | 70 | 70 | 72 | 74 | 57.99 | 56.82 |
| Processing Oil | HyPrene L2000 (naphthenic and paraffinic oils) | | | 8 | 8 | 12.45 | 12.2 |
| | Formosa Plastics Corporation, 500N | 8 | 10 | | | | |
| Peroxide | CR PP-20X (80%POLYPROPYLENE+20% 2,5-Dimethyl-2,5-bis(tert-butylperoxy)hexane) | 0.2 | 0.2 | 0.1 | 0.1 | 0.59 | 0.58 |
| Crosslinking co-agent | EM226 (PEG400DA) (Poly(ethylene glycol) di-acrylate) | | | | | 1.24 | 1.22 |
| | Atnen PDM-75 (75% N, N '- m-phenylene bismaleimide+25% Ethylene propylene terpolymer) | 1 | 0.7 | 1 | 0.5 | | |
| Anti-scorch agent | MERCK TEMPO (2,2,6,6-Tetramethylpiperidinooxy) | 0.03 | 0.03 | 0.03 | 0.03 | 0.04 | 0.04 |
| Filler | SILVERBOND 925 (Silica) | 0.86 | 0.86 | 0.86 | 0.86 | | |

(continued)

| Item | Sample | 6-1 | 6-2 | 6-3 | 6-4 | 6-5 | 6-6 |
|---|---|---|---|---|---|---|---|
| Antioxidant | JAK Chemicals - AO20 (Benzeneproanolc acid, 3-(1,1-dimethylethy)-4-hydroxy-5-methyl-, 2,4,8,10-tetraoxaspiro[5.5]undecane-3,9-diylbis(2,2-dimethyl-2,1-ethanedivl)ester) | 0.1 | 0.1 | 0.1 | 0.1 | | |
| | S9228 (Bis (2,4-dicumylphenyl) pentaerythritol diphosphite) | 0.2 | 0.2 | 0.2 | 0.2 | 0.2 | 0.2 |
| | AO80 (3,9-bis(2-(3-(3-tert-butyl-4-hydroxy-5-methylphenyl)propionyloxy-1,1-dimethylethyl)-2,4,8,10-tetraoxaspiro [5.5]undecane) | | | | | 0.2 | 0.2 |
| Lubricant | RBW 102 (a polar modified lubricant) | 0.2 | 0.2 | 0.2 | 0.2 | | |
| | KAO lubricant EB-FF(a kind of lubricant amide) | 0.6 | 0.6 | 0.6 | 0.6 | | |
| Impact toughne ss modifiers | Mitsui Chemicals, TAFMER MH5020C | | | | | 2.49 | 2.49 |
| Tackifier Resin | TAIR JIH INDUSTRIAL CO., LTD-MR130 (Maleic Modified Glycerol Ester of Gum Rosin) | | | | | | 1.96 |

Table 7 (unit: wt%)

| Item | Sample | 7-1 | 7-2 | 7-3 | 7-4 | 7-5 | 7-6 |
|---|---|---|---|---|---|---|---|
| Thermoplastic : Rubber Ratio | | 7:3 | 7:3 | 7:3 | 7:3 | 7:3 | 7:3 |
| Rubber | ESBR-1L | 8.68 | 8.86 | 8.91 | 8.74 | 8.42 | 8.2 |
| | BR-1L | 16.24 | 16.56 | 16.67 | 16.35 | 15.74 | 15.33 |
| Thermoplastic material | TPEE-1L2 | 58.3 | 59.47 | 59.85 | 58.69 | 56.5 | 55.02 |
| Processing Oil | HyPrene L2000 (naphthenic and paraffinic oils) | 12.52 | 12.77 | 12.85 | 12.6 | 12.13 | 11.81 |
| Peroxide | CR PP-20X (80%POLYPROPYLENE+20%2,5-Dimethyl-2,5-bis(tert-butylperoxy)hexane) | 0.6 | 0.61 | 0.61 | 0.6 | 0.58 | 0.56 |
| Crosslinking co-agent | EM226 (PEG400DA) (Poly(ethylene glycol) di-acrylate) | 1.25 | 1.28 | 0.64 | 2.56 | 1.21 | 1.18 |
| Anti-scorch agent | MERCK TEMPO (2,2,6,6-Tetramethylpiperidinooxy) | 0.04 | 0.04 | 0.05 | 0.04 | 0.04 | 0.04 |
| Antioxidant | S9228 (Bis (2,4-dicumylphenyl) pentaerythritol diphosphite) | 0.2 | 0.21 | 0.21 | 0.2 | 0.2 | 0.19 |
| | AO80 (3,9-bis(2-(3-(3-tert-butyl-4-hydroxy-5-methylphenyl)propionyloxy-1,1-dimethylethyl)-2,4,8,10-tetraoxaspiro [5.5]undecane) | 0.2 | 0.21 | 0.21 | 0.2 | 0.2 | 0.19 |
| Impact toughne ss modifiers | Mitsui Chemicals, TAFMER MH5020C | | | | | 4.98 | 7.47 |

(continued)

| Item | Sample | 7-1 | 7-2 | 7-3 | 7-4 | 7-5 | 7-6 |
|---|---|---|---|---|---|---|---|
| Tackifier Resin | TAIR JIH INDUSTRIAL CO., LTD-MR130 (Maleic Modified Glycerol Ester of Gum Rosin) | 1.96 | | | | | |

Table 8 (unit: wt%)

| Item | Sample | 8-1 | 8-2 | 8-3 | 8-4 | 8-5 |
|---|---|---|---|---|---|---|
| Thermoplastic : Rubber Ratio | | 7:3 | 7:3 | 7:3 | 7:3 | 7:3 |
| Rubber | ESBR-1L | 8.42 | 8.2 | 8.24 | 7.98 | 8.21 |
| | BR-1L | 15.75 | 15.34 | 15.41 | 14.92 | 15.35 |
| Thermoplastic material | TPEE-1L2 | 56.56 | 55.09 | 55.35 | 53.52 | 55.10 |
| Processing Oil | HyPrene L2000 (naphthenic and paraffinic oils) | 12.14 | 11.82 | 11.88 | 11.5 | 11.83 |
| Peroxide | CR PP-20X (80%POLYPROPYLENE+20%2,5-Dimethyl-2,5-bis(tert-butylperoxy)hexane) | 0.58 | 0.56 | 0.57 | *0.55* | 0.56 |
| Crosslinking co-agent | EM226 (PEG400DA) (Poly(ethylene glycol) diacrylate) | 1.21 | 1.18 | 1.19 | 1.15 | 1.18 |
| Anti-scorch agent | MERCK TEMPO (2,2,6,6-Tetramethylpiperidinooxy) | 0.04 | 0.04 | 0.04 | 0.04 | 0.04 |
| Antioxidant | S9228 (Bis (2,4-dicumylphenyl) pentaerythritol diphosphite) | 0.2 | 0.19 | 0.19 | 0.19 | 0.19 |
| | AO80 (3,9-bis(2-(3-(3-tert-butyl-4-hydroxy-5-methylphenyl)propionyloxy-1,1-dimethylethyl)-2,4,8,10-tetraoxaspiro [5.5]undecane) | 0.2 | 0.19 | 0.19 | 0.19 | 0.19 |
| Impact toughne ss modifiers | Mitsui Chemicals, TAFMER MH5020C | | 2.49 | 4.98 | 4.98 | |
| Tackifier Resin | TAIR JIH INDUSTRIAL CO., LTD-MR130 (Maleic Modified Glycerol Ester of Gum Rosin) | 4.9 | 4.9 | 1.96 | 4.98 | 7.35 |

Table 9 (unit: wt%)

| Item | Sample | 9-1 | 9-2 | 9-3 | 9-4 |
|---|---|---|---|---|---|
| Thermoplastic : Rubber Ratio | | 7.5:2.5 | 7.5:2.5 | 7.5:2.5 | 7.5:2.5 |
| Rubber | ESBR-1L | 4.40 | 4.29 | 4.18 | 4.07 |
| | BR-1L | 17.60 | 17.16 | 16.72 | 16.28 |
| Thermoplastic material | TPEE-1L1 | 66.23 | 64.58 | 62.92 | 61.26 |
| Processing Oil | HyPrene L2000 (naphthenic and paraffinic oils) | 8.82 | 8.60 | 8.38 | 8.16 |
| Peroxide | CR PP-20X (80%POLYPROPYLENE+20%2,5-Dimethyl-2,5-bis(tert-butylperoxy)hexane) | 0.88 | 0.86 | 0.84 | 0.82 |
| Croselinking co-agent | Atnen PDM-75 (75% N, N '- m-phenylene bismaleimide+25% Ethylene propylene terpolymer) | 0.22 | 0.22 | 0.21 | 0.20 |
| | Actigran SO 70 (70% TrimethylolpropaneTrimethacrylate+30% Silica) | 0.88 | 0.86 | 0.84 | 0.82 |

(continued)

| Item | Sample | 9-1 | 9-2 | 9-3 | 9-4 |
|---|---|---|---|---|---|
| Anti-scorch agent | MERCK TEMPO (2,2,6,6-Tetramethylpiperidinooxy) | 0.06 | 0.06 | 0.06 | 0.06 |
| Filler | SILVERBOND 925 (Silica) | 0.80 | 0.78 | 0.76 | 0.74 |
| Antioxidant | JAK Chemicals - AO20 (Benzeneproanolc acid, 3-(1,1-dimethylethy)-4-hydroxy-5-methyl-, 2,4,8,10-tetraoxaspiro[5.5]undecane-3,9-diylbis(2,2-dimethyl-2,1-ethanediyl)ester) | 0.10 | 0.10 | 0.10 | 0.09 |
| Tackifier Resin | TAIR JIH INDUSTRIAL CO., LTD-MR130 (Maleic Modified Glycerol Ester of Gum Rosin) | | 2.50 | 5.00 | 7.50 |

Table 10 (unit: wt%)

| Item | Sample | 10-1 | 10-2 | 10-3 | 10-4 |
|---|---|---|---|---|---|
| Thermoplastic : Rubber Ratio | | 8:2 | 8:2 | 8:2 | 8:2 |
| Rubber | BR-1L | 14.4 | 5.4 | 14.4 | 5.4 |
| Thermoplastic material | TPEE-1L2 | 55.77 | 20.91 | 55.77 | 20.91 |
| Elastomer | EVA-1 | 20 | 70 | | |
| | SEBS-g-MA (LCY 9901) | | | 20 | 70 |
| Processing Oil | HyPrene L2000 (naphthenic and paraffinic oils) | 7.2 | 2.7 | 7.2 | 2.7 |
| Peroxide | CR PP-20X (80%POLYPROPYLENE+20%2,5-Dimethyl-2,5-bis(tert-butylperoxy)hexane) | 0.08 | 0.03 | 0.08 | 0.03 |
| Crosslinking co-agent | Atnen PDM-75 (75% N, N '- m-phenylene bismaleimide+25% Ethylene propylene terpolymer) | 0.96 | 0.36 | 0.96 | 0.36 |
| Anti-scorch agent | MERCK TEMPO (2,2,6,6-Tetramethylpiperidinooxy) | 0.024 | 0.009 | 0.024 | 0.009 |
| Filler | SILVERBOND 925 (Silica) | 0.69 | 0.26 | 0.69 | 0.26 |
| Antioxadant | JAK Chemicals - AO20 (Benzeneproanolc acid, 3-(1,1-dimethylethy)-4-hydroxy-5-methyl-, 2,4,8,10-tetraoxaspiro [5.5]undecane-3,9-diylbis(2,2-dimethyl-2,1-ethanediyl)ester) | 0.08 | 0.03 | 0.08 | 0.03 |
| | S9228 (Bis (2,4-dicumylphenyl) pentaerythritol diphosphite) | 0.16 | 0.06 | 0.16 | 0.06 |
| Lubricant | RBW 102 (a polar modified lubricant) | 0.16 | 0.06 | 0.16 | 0.06 |
| | KAO lubricant EB-FF(a kind of lubricant amide) | 0.48 | 0.18 | 0.48 | 0.18 |

Table 11 (unit: wt%)

| Item | Sample | 11-1 |
|---|---|---|
| Thermoplastic : Rubber Ratio | | 6:4 |
| | SBR-1L2 | 4.35 |
| | BR-1L2 | 6.52 |
| Thermoplastic material | TPEE-1L1 | 29.29 |
| Elastomer | TPU-2 | 50 |

(continued)

| Item | Sample | 11-1 |
|---|---|---|
| Processing Oil | HyPrene L2000 (naphthenic and paraffinic oils) | 5.43 |
| | Epoxidized Soybean Oil (ESO) | 3.26 |
| Peroxide | CR PP-20X (80%POLYPROPYLENE+20%2,5-Dimethyl-2,5-bis(tert-butylperoxy)hexane) | 0.27 |
| Crosslinking co-agent | Atnen PDM-75 (75% N, N '- m-phenylene bismaleimide+25% Ethylene propylene terpolymer) | 0.14 |
| | AKTIOL (5% Alcohols, C8-18, ethoxylated propoxylated) | 0.14 |
| Anti-scorch agent | MERCK TEMPO (2,2,6,6-Tetramethylpiperidinooxy) | 0.02 |
| Filler | SILVERBOND925 (Silica) | 0.40 |
| Antioxidant | AO80 (3,9-bis(2-(3-(3-tert-butyl-4-hydroxy-5-methylphenyl)propionyloxy-1,1-dimethylethyl)-2,4,8,10-tetraoxaspiro[5.5]undecane) | 0.18 |

The following Table 12 to Table 14 show the properties of the high-adhesion composition used in the following examples, which are measured by the aforesaid analysis methods.

Table 12

| Samples | $T_{m1}$ (°C,DSC) | $T_{m2}$ (°C,DSC) | $\Delta H_{Tm1}$ (J/g) | $\Delta H_{Tm2}$ (J/g) | $T_c$ (°C,DSC) | $\Delta H_{crystat}$ (J/g) | Factor |
|---|---|---|---|---|---|---|---|
| 4-1 | 149.61 | - | 1.0533 | - | 114.06 | 2.067 | 0.4 |
| 4-2 | 148.71 | - | 2.0914 | - | 112.91 | 4.8717 | 0.9 |
| 4-3 | 146.25 | - | 2.6207 | - | 113.04 | 5.576 | 1.0 |
| 4-4 | 146.67 | - | 3.9003 | - | 113.41 | 7.9541 | 1.5 |
| 4-5 | 110.89 | -15.7 | - | 19.83 | 96.27 | - | 11.4 |
| 4-6 | 146.78 | - | 3.5201 | - | 100.68 | 9.3235 | 1.6 |
| 5-1 | 149.01 | - | 2.2519 | - | 113.92 | 8.1325 | 1.3 |
| 5-2 | 120.9 | -13.17 | 35.88 | 5.099 | 106.87 | 37.44 | 19.3 |
| 5-3 | 168.48 | -16.7 | 5.077 | 16.02 | 116.3 | 8.333 | 14.0 |
| 5-4 | - | -19.11 | - | 19.48 | 96.06 | - | 14.1 |
| 5-5 | - | -17.88 | - | 17.885 | 99.36 | - | 13.2 |
| 6-1 | 167.25 | -18.49 | 3.804 | 20.545 | 115.56 | 8.6234 | 15.1 |
| 6-2 | 170.15 | -20.32 | 1.8328 | 19.372 | 97.81 | 8.1433 | 16.3 |
| 6-3 | 143.39 | -18.28 | 1.4754 | 15.804 | 84.67 | 1.7917 | 14.0 |
| 6-4 | 139.82 | -17.99 | 1.5147 | 16.224 | 84.09 | 2.1124 | 13.8 |

Table 13

| Samples | $T_{m1}$ (°C,DSC) | $T_{m2}$ (°C,DSC) | $\Delta H_{Tm1}$ (J/g) | $\Delta H_{Tm2}$ (J/g) | Tc (°C,DSC) | $\Delta H_{crystal}$ (J/g) | Factor | Melting onset temperature (°C) | Slope of melt viscosity-temperature |
|---|---|---|---|---|---|---|---|---|---|
| 9-1 | 147.15 | -22.02 | 6.35 | 0.48 | 103.87 | 9.65 | 19.3 | 118.7 | -3.08 |
| 9-2 | 145.7 | -20.4 | 7.86 | 0.51 | 103.38 | 10.56 | 18.4 | - | - |
| 9-3 | 145.18 | -21.18 | 6.28 | 0.38 | 102.89 | 9.94 | 18.7 | 117.6 | -3.00 |

(continued)

| Samples | $T_{m1}$ (°C,DSC) | $T_{m2}$ (°C,DSC) | $\Delta H_{Tm1}$ (J/g) | $\Delta H_{Tm2}$ (J/g) | Tc (°C,DSC) | $\Delta H_{crystal}$ (J/g) | Factor | Melting onset temperature (°C) | Slope of melt viscosity-temperature |
|---|---|---|---|---|---|---|---|---|---|
| 9-4 | 145.34 | -20.74 | 6.62 | 0.48 | 102.71 | 9.76 | 18.4 | - | - |
| 6-5 | 142.44 | -19.84 | 7.6 | 1.68 | 84.23 | 10.62 | 17.8 | 105.5 | -4.67 |
| 6-6 | 143.38 | -19.54 | 6.49 | 1.35 | 94.7 | 10.69 | 17.5 | 116.6 | -2.63 |
| 7-1 | 142.1 | -19.59 | 7.8 | 0.96 | 80.84 | 11.43 | 17.8 | 102.3 | -5.22 |
| 7-2 | 143.9 | -20.06 | 6.05 | 1.2 | 91.56 | 8.99 | 17.6 | 108.3 | -3.91 |
| 7-3 | 145.13 | -19.94 | 8.5385 | 1.2286 | 85.39 | 10.186 | 18.0 | - | - |
| 7-4 | 147.89 | -21.56 | 5.086 | 0.3724 | 104.18 | 8.4445 | 18.7 | - | - |
| 7-5 | 145.51 | -19.04 | 5.75 | 1.61 | 98.19 | 8.33 | 16.7 | 120.2 | -2.10 |
| 7-6 | 145.14 | -20.29 | *5.55* | 2.04 | 101.68 | 8.21 | 17.6 | 122.6 | -1.84 |
| 8-1 | 141.57 | -20.37 | 7.77 | 0.84 | 84.5 | 9.4 | 18.2 | 104.1 | -3.87 |
| 8-2 | 143.02 | -20.17 | 6.88 | 1.26 | 95.43 | 8.41 | 17.8 | 115.8 | -2.29 |
| 8-3 | 144.02 | -18.65 | 5.91 | 1.9 | 99.84 | 7.52 | 16.3 | 128.6 | -1.93 |
| 8-4 | 144.37 | -19.68 | 5.92 | 1.12 | 97.86 | 7.98 | 17.2 | 119.9 | -2,12 |
| 8-5 | 142.02 | -20.07 | 7.11 | 0.6 | 89.81 | 8.8 | 17.8 | 105.7 | -3.49 |
| 11-1 | 136.96 | -21.03 | 3.49 | 0.69 | 76.13 | 4 | 17.5 | 99.7 | -4.91 |

Table 14

| Sample | 4-1 | 4-2 | 4-3 | 4-4 | 4-5 | 4-6 | 5-1 | 5-2 | 5-3 | 5-4 | 5-5 | 6-1 |
|---|---|---|---|---|---|---|---|---|---|---|---|---|
| TI content (%) | 51.8 | 68.5 | 57.3 | 62.3 | 70.6 | 72.4 | 63.5 | 100.0 | 83.2 | 68.6 | 63.5 | 60.1 |
| Sample | 6-2 | 6-3 | 6-4 | 9-1 | 9-2 | 9-3 | 9-4 | 6-5 | 6-6 | 7-1 | 7-2 | 7-3 |
| TI content (%) | 87.0 | 73.4 | 73.4 | 81.9 | 82.5 | 85.1 | 86.7 | 86.6 | 97.0 | 79.9 | 80.5 | 93.7 |
| Sample | 7-4 | 7-5 | 7-6 | 8-1 | 8-2 | 8-3 | 8-4 | 8-5 | 11-1 | | | |
| TI content (%) | 80.9 | 98.4 | 98.6 | 79.4 | 94.1 | 99.6 | 99.0 | 80.5 | 41.6 | | | |

**Preparing method**

The preparing methods including the reactive compounding process, the melt blending process, and the injection molding process of the following examples (abbreviated as E) are summarized in the following Table 15 to Table 18. M1, M2 and M3 respectively represent Method 1, Method 2 and Method 3 described above. The equipment for performing the injection molding process is an injection molding machine (SM128V manufactured by Chen Hsong injection molding machinery).

Table 15

| | E1 | E2 | E3 | E7 | E8 | E9 | E10 | E11 | E12 |
|---|---|---|---|---|---|---|---|---|---|
| Process type | M1 | M1 | M2 | M1 | M1 | M2 | M2 | M2 | M2 |
| Reactive compounding Temp./ Melt blending Temp. (°C) | 200 | 200 | 200 | 200 | 200 | 200 | 200 | 200 | 200 |
| Injection temperature (°C) | 170 | 170 | 170 | 170 | 170 | 190 | 190 | 225 | 225 |
| Injection pressure ($kg/cm^2$) | 650 | 650 | 650 | 650 | 650 | 650 | 650 | 650 | 650 |

Table 16

| | E15 | E16 | E17 | E18 | E19 | E20 | E21 | E22 | E24 |
|---|---|---|---|---|---|---|---|---|---|
| Process type | M2 | M2 | M1 | M1 | M1 | M1 | M1 | M1 | M1 |
| Reactive compounding Temp. / Melt blending Temp. (°C) | 200 | 200 | 200 | 200 | 200 | 200 | 200 | 200 | 200 |
| Injection temperature (°C) | 210 | 210 | 210 | 210 | 210 | 210 | 210 | 210 | 210 |
| Injection pressure ($kg/cm^2$) | 650 | 650 | 650 | 650 | 650 | 650 | 650 | 650 | 100 |

Table 17

| | E25 | E26 | E27 | E28 | E29 | E30 | E31 |
|---|---|---|---|---|---|---|---|
| Process type | M3 | M3 | M3 | M3 | M3 | M3 | M3 |
| Reactive compounding Temp. / Melt blending Temp. (°C) | 200 | 200 | 200 | 200 | 200 | 200 | 200 |
| Injection temperature (°C) | 210 | 210 | 210 | 210 | 210 | 210 | 210 |
| Injection pressure ($kg/cm^2$) | 100 | 100 | 100 | 100 | 100 | 100 | 100 |
| Foaming agent | $N_2$ in SCF | $N_2$ in SCF | $N_2$ in SCF | $N_2$ in SCF | $N_2$ in SCF | $N_2$ in SCF | $N_2$ in SCF |
| | E32 | E33 | E34 | E35 | E36 | E37 | E38 |
| Process type | M3 | M3 | M3 | M3 | M3 | M3 | M3 |
| Reactive compounding Temp. / Melt blending Temp. (°C) | 200 | 200 | 200 | 200 | 200 | 200 | 200 |
| Injection temperature (°C) | 210 | 210 | 210 | 210 | 210 | 210 | 210 |
| Injection pressure (kg/cm2) | 100 | 100 | 100 | 100 | 100 | 100 | 100 |
| Foaming agent | $N_2$ in SCF | $N_2$ in SCF | $N_2$ in SCF | $N_2$ in SCF | $N_2$ in SCF | $N_2$ in SCF | $N_2$ in SCF |

Table 18

| | E41 | E42 | E43 | E44 | E45 | E46 | E47 | E48 | E49 |
|---|---|---|---|---|---|---|---|---|---|
| Process type | M1 | M2 | M1 | M1 | M1 | M2 | M2 | M1 | M1 |
| Reactive compounding Temp. / Melt blending Temp. (°C) | 200 | 200 | 200 | 200 | 200 | 200 | 200 | 200 | 200 |
| Injection temperature (°C) | 210 | 210 | 210 | 210 | 210 | 210 | 210 | 210 | 210 |
| Injection pressure ($kg/cm^2$) | 650 | 650 | 650 | 650 | 650 | 650 | 650 | 650 | 650 |

**Results**

The following Table 19 to Table 27 show the results of the peeling test on the adhesive-free multilayer composites obtained in the aforesaid examples, which are measured by the aforesaid analysis methods.

Table 19

| # | | E1 | E2 | E3 |
|---|---|---|---|---|
| 1st Layer | Material | 4-6 (TI=72.4) | 5-3 (TI=83.2) | 11-1 (TI=41.6) |
| 2nd Layer | Material | TPEE-1 | TPEE-2 | TPU-1 |
| Peel strength (N/mm) | | 4 | 5.9 | 4.4 |

The results shown in Table 19 indicate that the adhesive-free multilayer composite has high peel strength when the toluene insoluble (TI) content of the high-adhesion composition for forming the first layer is equal to or higher than 10%,

in particular within 30% to 99%.

Table 20

| # | | E7 | E8 | E9 | E10 | E11 | E12 |
|---|---|---|---|---|---|---|---|
| 1st Layer | Material (T.P. ratio) | 5-2 (100wt% OBC) | 5-2 (100wt% OBC) | 10-1 (20wt% EVA) | 10-2 (70wt% EVA) | 10-3 (20wt% SEBS-g-MA) | 10-4 (70wt% SEBS-g-MA) |
| 2nd Layer | Material | EVA-1 | EVA-O | EVA-1 | EVA-1 | PA-g | PA-g |
| Peel strength (N/mm) | | 4.7 | 6.3 | 0.5 | 1 | 0.6 | 2.8 |
| *T.P.: Thermoplastic material | | | | | | | |

Compared to E7, E8 having the thermoplastic material (OBC) in its first layer identical to an ingredient (OBC) of the material of the second layer exhibits higher peel strength, indicating improved adhesive capability.

Compared to E9, E10 having an elastomer (EVA) in the material of the first layer identical to the material (EVA) of the second layer exhibits higher peel strength, indicating improved adhesive capability.

In addition, E11 and E12 with increasing proportion of the elastomer in the material of the first layer improve superior interlayer compatibility, exhibiting higher peel strength.

Table 21

| # | | E15 | E16 | E17 | E18 | E19 | E20 |
|---|---|---|---|---|---|---|---|
| 1st Layer | Material (Peroxide/ Crosslinking co-agent) | 5-5 (0.4 wt% / 1 wt%) | 4-5 (0.1 wt% / 1.2 wt%) | 6-2 (0.2 wt% / 0.7 wt%) | 6-1 (0.2 wt% / 1 wt%) | 6-3 (0.1 wt% / 1 wt%) | 6-4 (0.1 wt% / 0.5 wt%) |
| 2nd Layer | Material | TPU-1 | TPU-1 | TPU-1 | TPU-1 | TPU-1 | TPU-1 |
| Peel strength (N/mm) | | 3.6 | 4.5 | 1.4 | 1.9 | 2.3 | 2.6 |
| # | | E21 | E22 | | | | |
| 1st Layer | Material (Peroxide/ Crosslinking co-agent) | 6-3 (0.1 wt% / 1 wt%) | 6-4 (0.1 wt% / 0.5 wt%) | | | | |
| 2nd Layer | Material | TPEE-1 | TPEE-1 | | | | |
| Peel strength (N/mm) | | 2.9 | 2.6 | | | | |

In the results of E15 to E20, the high-adhesion composition with decreasing proportion of crosslinking agents, especially 0.1 %, demonstrates lower cross-linking degree, and exhibits higher peel strength.

In the results of E15 to E22, the high-adhesion composition with amount of crosslinking co-agents used less than 3 wt%, in particular less than 1.5 wt%, exhibits adhesion effect.

Table 22

| # | | E24 | E25 | E26 |
|---|---|---|---|---|
| 1st Layer | Material (MR wt%) | 9-2 (2.5 wt%) | 9-3 (5 wt%) | 9-4 (7.5 wt%) |
| 2nd Layer | Material | TPU-1 | | |
| Peel strength (N/mm) | | 6.0 | 4.9 | 5.8 |
| *MR=Maleic rosin (Tackifier Resin) | | | | |

The results of Table 22 indicate that adding a tackifier can provide high peel strength.

Table 23

| # | | E27 | E28 | E29 | E30 | E31 |
|---|---|---|---|---|---|---|
| 1st Layer | Material (Factor) | 8-3 (16.3) | 7-5 (16.7) | 8-4 (17.2) | 8-1 (18.2) | 8-5 (17.8) |
| 2nd Layer | Material | TPU-1 | | | | |
| Peel strength (N/mm) | | 2.4 | 3.4 | 4.9 | 5.1 | 4.2 |

The results of Table 23 indicate that adding a tackifier and/or an impact toughness modifier can provide higher peel strength.

Table 24

| # | | E32 | E33 | E34 | E35 |
|---|---|---|---|---|---|
| 1st Layer | Material (P/R) | 4-1 (4:6) | 4-2 (5:5) | 4-3 (6:4) | 4-4 (7:3) |
| 2nd Layer | Material | TPEE-1 | | | |
| Peel strength (N/mm) | | 0.76 | 1.27 | 1.4 | 2.34 |
| *P/R: Thermoplastic material/Rubber | | | | | |

Under the system using SBR as cross-linked rubber and TPEE as thermoplastic material, E32 to E35 having the weight ratio of the thermoplastic material (P) to the cross-linked rubber (R) in a range of 4:6 to 7:3 exhibits peel strength higher than 0.5 N/mm.

In the present disclosure, the increased rubber ratio leads to a decrease in peel strength due to the decreased chain segment entanglement effect. The present disclosure, due to its specific crystallinity and/or crosslinking degree relationship, achieves optimal mutual entanglement of molecular chains, thus possessing high peel strength.

Table 25

| # | | E36 | E37 | E38 |
|---|---|---|---|---|
| 1st Layer | Material (Peroxide/ Crosslinking co-agent/ Factor) | 9-1 (0.88 wt%/ 1.1 wt%/ 19.3) | 7-2 (0.61 wt%/ 1.28 wt%/ 17.6) | 11-1 (0.27 wt%/ 0.28 wt%/ 17.5) |
| 2nd Layer | Material | TPU-1 | | |
| Peel strength (N/mm) | | 4.7 | 5.7 | 4.4 |

Table 26

| # | Material | | Crosslinking system (wt%) | | Peel strength (N/mm) |
|---|---|---|---|---|---|
| | 1st layer | 2nd layer | Peroxide | Crosslinking co-agent | |
| E41 | 5-3 | TPU-1 | 1 | 1 | 0.8 |
| E42 | 5-5 | TPU-1 | 0.4 | 1 | 3.6 |
| E43 | 7-4 | TPU-1 | 0.6 | 2.56 | 3.9 |
| E44 | 7-3 | TPU-1 | 0.61 | 0.64 | 4.5 |
| E45 | 6-4 | TPU-1 | 0.1 | 0.5 | 2.6 |
| E46 | 10-4 | PA-g | 0.03 | 0.36 | 2.8 |
| E47 | 11-1 | TPU-1 | 0.27 | 0.28 | 4.4 |

The results shown in Table 26 indicate when the contents of the peroxide and crosslinking co-agent of the mixture for preparing the high-adhesion composition are within a specific range, the peel strength of the adhesive-free multilayer composite can be improved.

Table 27

| # | Material | | TI content | Peel strength (N/mm) |
|---|---|---|---|---|
| | 1st layer | 2nd layer | | |
| E48 | 8-3 | TPU-1 | 99.8% | 2.4 |
| E49 | 8-1 | TPU-1 | 59.4% | 5.1 |
| E47 | 11-1 | TPU-1 | 41.6% | 4.4 |

The results shown in Table 27 indicate when the toluene insoluble content of the high-adhesion composition are within a specific range, the peel strength of the adhesive-free multilayer composite can be improved.

The high-adhesion composition of the present disclosure, due to its specific degree of crosslinking and/or crystallinity, can provide an "adhesive-free" process solution for footwear products or hand tool article. By utilizing the characteristics of "toluene insoluble content (TI content)" and/or "thermal property factor (Factor)," the cross-linking status and/or crystalline in the high-adhesion composition can be presented. In addition, the layer (i.e. the first layer) produced by the high-adhesion composition of the present disclosure can be directly bonded to other materials (i.e. the material of the second layer) during the injection molding process, effectively reducing the environmental problems associated with solvent use, VOC emissions, and personnel safety in existing processes (that require adhesives).

Although the present disclosure has been explained in relation to its embodiment, it is to be understood that many other possible modifications and variations can be made without departing from the spirit and scope of the disclosure as hereinafter claimed.

## Claims

**1.** A high-adhesion composition, comprising:

a thermoplastic material; and
a cross-linked rubber;
wherein the high-adhesion composition has a toluene insoluble content equal to or higher than 10%.

**2.** The high-adhesion composition of claim 1, wherein the high-adhesion composition is obtained by reacting a mixture comprising a crosslinking co-agent, wherein the crosslinking co-agent is at least one having a structure selected from the group consisting of: a bismaleimide structure, an alcohol structure, and an acrylate structure; and wherein a content of the crosslinking co-agent is less than 3 wt% based on a total weight of the high-adhesion composition.

**3.** The high-adhesion composition of claim 1 or 2, wherein the toluene insoluble content is in a range from 30% to 99%.

**4.** The high-adhesion composition of any of claims 1 to 3, wherein the high-adhesion composition has a Factor in a range from 0.3 to 25, calculated by the following equation (I):

$$\textbf{Factor} = -0.7879 \times T_{m2} + 0.1271 \times \Delta H_{Tm1} - 0.0514 \times \Delta \boldsymbol{H}_{\boldsymbol{Tm}2} + 0.1248 \times \Delta \boldsymbol{H}_{crystal} \quad \text{(I)}$$

wherein $T_{m2}$ is a melting point of the high-adhesion composition in a range from -10 °C to -25 °C;
$\Delta H_{Tm1}$ is a heat of a melting point of the high-adhesion composition in a range from 110 °C to 180 °C;
$\Delta H_{Tm2}$ is a heat of the melting point of the high-adhesion composition in a range from -10 °C to -25 °C; and
$\Delta H_{crystal}$ is a heat of a crystallization peak of the high-adhesion composition in a range from 75 °C to 120 °C.

**5.** The high-adhesion composition of any of claims 1 to 4, wherein the high-adhesion composition has a melting point in a range from 110 °C to 180 °C, and a heat of the melting point is in a range from 1 J/g to 40 J/g, and/or

wherein the high-adhesion composition has a melting point in the range from -10°C to -25 °C, and a heat of the melting point is less than 25 J/g, and/or
wherein the high-adhesion composition has a crystallization peak in a range from 75 °C to 120 °C, and a heat of the crystallization peak is in a range from 1.5 J/g to 40 J/g.

6. The high-adhesion composition of any of claims 1 to 5, wherein the thermoplastic material is selected from the group consisting of: polyester, olefin block copolymer (OBC) and a combination thereof.

7. The high-adhesion composition of any of claims 1 to 6, wherein the cross-linked rubber is a cross-linked diene-based rubber, and/or
wherein the cross-linked diene-based rubber is at least one selected from the group consisting of: cross-linked styrene-butadiene rubber (SBR), cross-linked butadiene rubber (BR), and cross-linked nitrile butadiene rubber (NBR).

8. The high-adhesion composition of any of claims 1 to 7, wherein the thermoplastic material is thermoplastic polyester elastomer (TPEE), and the cross-linked rubber comprises cross-linked styrene-butadiene rubber (SBR) and cross-linked butadiene rubber (BR), and/or
wherein a weight ratio of SBR to BR is in a range from 10/90 to 90/10.

9. The high-adhesion composition of any of claims 1 to 8, wherein the high-adhesion composition is obtained by reacting a mixture comprising an elastomer, and/or
wherein a content of the elastomer is in a range from 0.5 wt% to 80 wt% based on the total weight of the high-adhesion composition.

10. The high-adhesion composition of any of claims 1 to 9, wherein the high-adhesion composition has a melting onset temperature in a range from 90 °C to 140 °C, and a slope of a melt viscosity-temperature curve at a temperature above the melting onset temperature ranges from -1 to -6.

11. The high-adhesion composition of any of claims 1 to 10, wherein a weight ratio of the thermoplastic material to the cross-linked rubber is in a range from 2:3 to 4:1.

12. The high-adhesion composition of any of claims 1 to 11, wherein the high-adhesion composition is obtained by reacting a mixture comprising an additive selected from the group consisting of: a tackifier resin, an impact toughness modifier, an anti-scorch agent, a filler, a compatibilizer, a lubricant, an antioxidant, a processing oil, and a combination thereof, and/or

wherein the tackifier resin selected from the group consisting of: a rosin-based resin, a terpene-based resin, a hydrocarbon resin, a phenolic resin, and a combination thereof, wherein a content of the tackifier resin is in a range from 1.5 wt% to 10 wt% based on the total weight of the high-adhesion composition, and/or
wherein the impact toughness modifier selected from the group consisting of: a nonpolar or polar olefin homopolymer and copolymer, wherein a content of the impact toughness modifier is in a range from 2 wt% to 10 wt% based on the total weight of the high-adhesion composition.

13. An adhesive-free multilayer composite, comprising:

a first layer comprising the high-adhesion composition of any of claims 1 to 12; and
a second layer formed on the first layer,
wherein a peel strength between the first layer and the second layer is greater than or equal to 0.5 N/mm, and/or
wherein the adhesive-free multilayer composite does not comprise any adhesive for bonding between the first layer and the second layer, and/or
wherein the first layer comprises a material the same as a material of the second layer.

14. An article, comprising the adhesive-free multilayer composite of claim 13.

15. A method for manufacturing the adhesive-free multilayer composite of claim 13, comprising the following steps:

providing a first material and a second material, wherein the first material comprises the high-adhesion composition of any of claims 1 to 12; and
performing an injection molding process on the first material and the second material at a temperature between 160°C and 230 °C to obtain the adhesive-free multilayer composite of claim 13.

Europäisches Patentamt
European Patent Office
Office européen des brevets

# EUROPEAN SEARCH REPORT

Application Number
EP 25 22 7194

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 074 775 A1 (LCY CHEMICAL CORP [TW]) 19 October 2022 (2022-10-19) * claim 1; examples 1-6; tables 1-4 * ----- | 1-15 | INV. C08L67/02 C08L75/06 A43B1/10 |
| A | EP 4 031 608 A1 (NIKE INNOVATE CV [US]) 27 July 2022 (2022-07-27) * claims 1-4 * ----- | 1-15 | |
| A | CN 117 617 626 A (IND TECH RES INST) 1 March 2024 (2024-03-01) * paragraphs [0001] - [0002]; claim 1 * ----- | 1-15 | |
| | | | TECHNICAL FIELDS SEARCHED (IPC) |
| | | | C08G C08L A43B |

The present search report has been drawn up for all claims

1

| Place of search | Date of completion of the search | Examiner |
|---|---|---|
| Munich | 20 May 2026 | Höfler, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 22 7194

This annex lists the patent family members relating to the patent documents cited in the above-mentioned European search report. The members are as contained in the European Patent Office EDP file on
The European Patent Office is in no way liable for these particulars which are merely given for the purpose of information.

20-05-2026

| Patent document cited in search report | Publication date | Patent family member(s) | Publication date |
|---|---|---|---|
| EP 4074775 A1 | 19-10-2022 | CN 115216070 A | 21-10-2022 |
| | | EP 4074775 A1 | 19-10-2022 |
| | | JP 7504150 B2 | 21-06-2024 |
| | | JP 2022164626 A | 27-10-2022 |
| | | JP 2024041833 A | 27-03-2024 |
| | | TW 202242023 A | 01-11-2022 |
| | | US 2022332943 A1 | 20-10-2022 |
| EP 4031608 A1 | 27-07-2022 | CN 114375166 A | 19-04-2022 |
| | | CN 114375167 A | 19-04-2022 |
| | | CN 114430661 A | 03-05-2022 |
| | | CN 114667079 A | 24-06-2022 |
| | | DE 112020003673 T5 | 15-06-2022 |
| | | DE 112020003739 T5 | 12-05-2022 |
| | | EP 3986960 A1 | 27-04-2022 |
| | | EP 4007791 A1 | 08-06-2022 |
| | | EP 4028458 A1 | 20-07-2022 |
| | | EP 4031608 A1 | 27-07-2022 |
| | | GB 2600855 A | 11-05-2022 |
| | | GB 2603696 A | 10-08-2022 |
| | | US 2021076772 A1 | 18-03-2021 |
| | | US 2021078275 A1 | 18-03-2021 |
| | | US 2021078276 A1 | 18-03-2021 |
| | | US 2021079186 A1 | 18-03-2021 |
| | | US 2023397694 A1 | 14-12-2023 |
| | | WO 2021050845 A1 | 18-03-2021 |
| | | WO 2021050846 A1 | 18-03-2021 |
| | | WO 2021050934 A1 | 18-03-2021 |
| | | WO 2021050938 A1 | 18-03-2021 |
| CN 117617626 A | 01-03-2024 | CN 117617626 A | 01-03-2024 |
| | | TW 202408389 A | 01-03-2024 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 63739363